# EUROPEAN PATENT APPLICATION

(11) **EP 0 800 316 A2**
(43) Date of publication of application: **08.10.1997**
(21) Application number: 97107378.8
(22) Date of filing: 15.10.1990
(51) Int. Cl.: H04N 7/30, H04N 7/50

(54) **Method of coding video signals and transmission system thereof**

(30) Priority: 14.10.1989 JP 267049/89 U
(62) Divisional of application: 90311248.0
(71) Applicant: SONY CORPORATION, Tokyo (JP)
(72) Inventor: Yagasaki, Yoichi, Shinagawa-ku, Tokyo (JP); Yonemitsu, Jun, Shinagawa-ku, Tokyo (JP)
(74) Representative: Ayers, Martyn Lewis Stanley

(57) **Abstract**

A method and apparatus for coding video data to reduce the amount of data that must be transmitted, involving performing a discrete cosine transform of a frame of data, requantizing the transformed data with a variable quantizing step and recoding the requantized data with a variable coding length. The size of the quantizing step is controlled according to a characteristic of the data.

## Description

### BACKGROUND OF THE INVENTION

The present invention relates to a method of coding video signals, and more particularly, to a video signal coding method by which digital video signals are transformed into high-efficient-coded data which is recorded as delay of a higher enhancement of the picture quality by a disk recorder.

The following is a description of a video signal recording system proposed so far. Recorded on a recording medium such as a CD (compact disc) are intra and inter-frame-coded data obtained by high-efficient-coding video signals consisting of motion pictures. The recorded data are then, if necessary, searched.

High-efficient-coding is attained as follows. As illustrated in, e.g., FIG. 1(A), motion pictures PC1, PC2, PC3, ... are digital-coded at timings t = t1, t2, t3, ... . When being transmitted to a transmission system constructed of, e.g., a CD recording system, a transmission efficiency is enhanced by compressing the digital data to be transmitted while making use of such a characteristic that the video signal is large of autocorrelativity. More specifically, an intra frame coding process is effected in the following manner. With respect to the pictures PC1, PC2, PC3, ..., arithmetic processing is performed to obtain a difference between one-dimensionally or two-dimensionally adjacent picture data along, for instance, a horizontal scanning line. Subsequently, the compressed bit-number picture data of the respective pictures PC1, PC2, PC3, ... are transmitted.

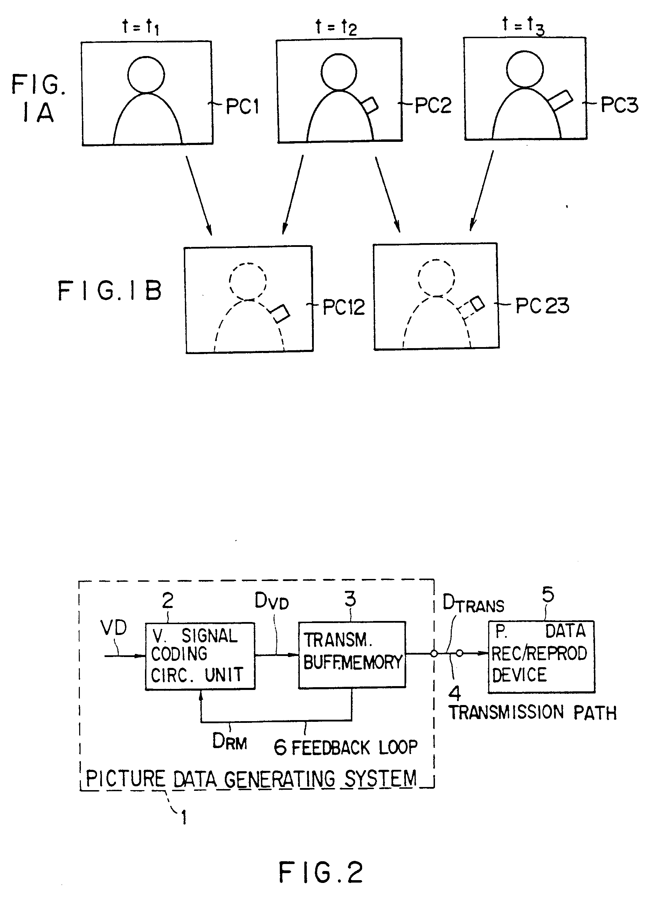

An inter frame coding process is carried out as below. As shown in FIG. 1(B), there are sequentially obtained picture data PC12, PC23, ... which consist of differences in pixel data between the adjacent pictures PC1, PC2 and between the adjacent pictures PC2, PC3, ... . The thus obtained picture data are transmitted together with the intra-frame-coded picture data with respect to the initial picture PC1 at the timing t = t₁.

Thus, it is possible to transmit, to the transmission system, the video signals which have been high-efficient-coded to obtain the digital data having a remarkably less number of bits than in the transmission of all the pixel data of the pictures PC1, PC2, PC3, ... .

The above-described video signal coding process is executed by a picture data generating device 1 constructed as shown in FIG. 2.

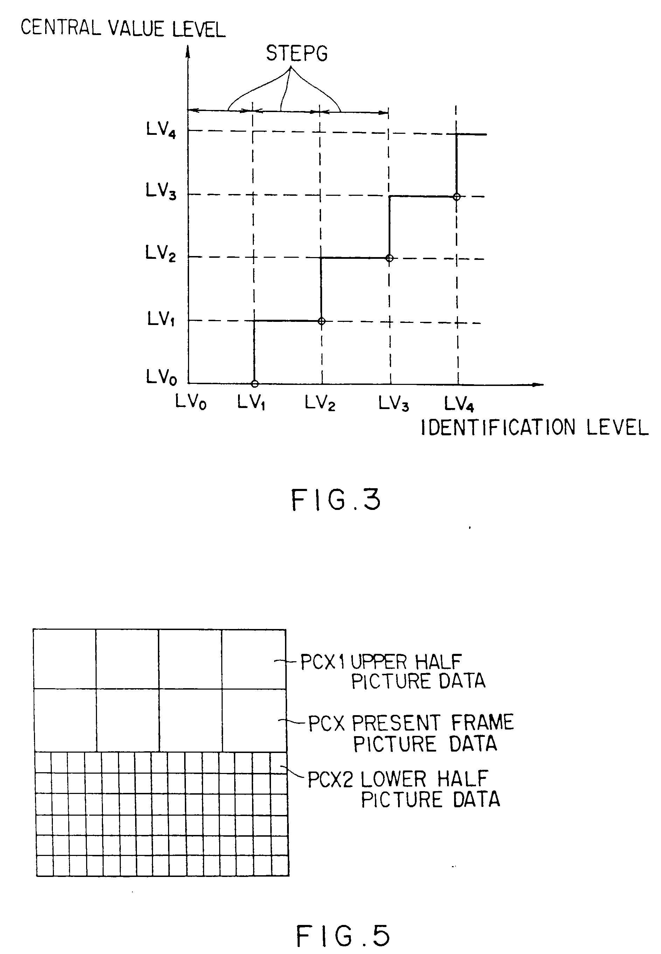

An arrangement of the picture data generating device 1 will be explained. A video signal VD is quantized to high-efficient-coded data D_{VD} in a video signal coding circuit unit 2. The data D_{VD} temporarily stored in a transmission buffer memory 3 is read as transmission data D_{TRANS} at a predetermined transmitting velocity. The transmission data D_{TRANS} is transmitted via a transmission path 4 constituting a transmission route to a picture data recording/reproducing device 5 composed of, e.g., a CD recording/reproducing device. The transmission buffer memory 3 transmits the transmission data D_{TRANS} at the transmitting velocity determined by a transmission capacity of the transmission path 4 leading to the picture data recording/reproducing device 5. Simultaneously, the transmission buffer memory 3 feeds back a remaining quantity data signal D_{RM} via a feedback loop 6 to the video signal coding circuit unit 2, the signal D_{RM} indicating a data remaining quantity in the memory 3. As a result, the video signal coding circuit unit 2 controls a data quantity of the high-efficient-coded data D_{VD} supplied to the transmission buffer memory 3 by controlling a quantization step STEPG (FIG. 3) employed when digital-coding the video signal VD. The data held in the memory 3 are controlled so as not to cause an overflow or underflow.

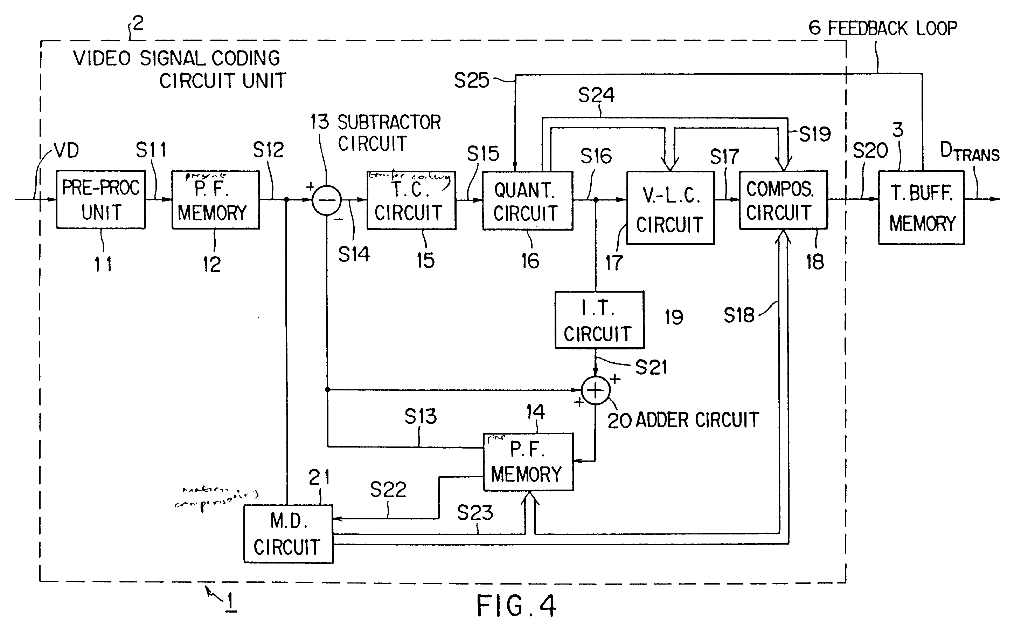

In the video signal coding circuit unit 2, as depicted in FIG. 4, a preprocessor 11 receives the video signals VD and transforms a luminance signal and a chroma signal, which are contained in the video signals, into digital data. Thereafter, a one-side field removing process and a one-side field line cull-out process are executed to thereby transform the digital data into motion picture data. The motion picture data is then transformed into transmission unit block data S11 consisting of 16 pixels (horizontal direction) x 16 lines data. The thus transformed data S11 are accumulated in a present frame memory 12.

Frame picture data of a frame to be transmitted at present is held in the present frame memory 12. The frame picture data conceived as present frame data S12 is supplied to a subtractor circuit 13 as an addition input.

Given to the subtractor circuit 13 is preframe data S13 obtained from a preframe memory 14. Obtained at an output terminal of the subtractor circuit 13 is deviation data S14 exhibiting a deviation between the transmission unit block data of the present frame picture data and the transmission unit block data of the preframe picture data. The deviation data S14 is transformed into transform coding data S15 by means of a transform coding circuit 15 consisting of, e.g., a discrete cosine transform circuit. The data S15 is thereafter quantized in a quantization circuit 16.

Quantization data S16 obtained from the quantization circuit 16 is high-efficient-coded once again in a variable-length coding circuit 17. Variable-length coding data S17 thereof is composited with pieces of first and second management information S18 and S19 in a composition circuit 18. Subsequent to this step, there is supplied the composite data as transmission picture data S20 to the transmission buffer memory 3.

Additionally, the quantization data S16 is inverse-transformed by means of an inverse transform circuit 19 including an inverse quantization circuit and an inverse transform coding circuit. The inverse-transformed data are accumulated as decoding deviation data S21 in a preframe memory 14 via an adder circuit 20. The present frame picture data sent to the transmission buffer memory 3 are accumulated, as the preframe picture data, in the preframe memory 14.

On the other hand, a motion compensating circuit 21 is supplied with the present frame data S12 of the present frame memory 12 together with preframe data S22 of the preframe memory 14. Motion vector data S23 is thereby formed with respect to the transmission unit block of a motion appearing picture from the preframe picture data among the present frame picture data. The motion vector data S23 is supplied to the preframe memory 14 and at the same moment supplied, as the first management information S18, to the composition circuit 18. In consequence, as a part of header information of the data corresponding to the deviation data S14, the motion vector data S23 is transmitted to the transmission buffer memory 3.

The variable-length coding circuit 17 is supplied with quantization step data S24, as a variable-length conditional signal, representing the quantization step employed for quantization by the quantization circuit 16. The quantization step data S24 is also supplied as the second management information S19 to the composition circuit 18. This information is composited with the transmission picture data S20 as a part of the header information given to data of the deviation data S14.

Based on this construction, when transmitting the picture data PC1 at the timing t₁ of FIG. 1(A) in the form of intra-frame-coded data, there is given the data of a value [0] (representing a null picture) as the preframe data S13 supplied to the subtractor circuit 13, whereby the present frame data S12 to be transmitted at present is supplied, as deviation data S14, directly to the transform coding circuit 15 via the subtractor circuit 13.

At this time, the transform coding circuit 15 transmits transform coding data S15, which has been intra-frame-coded, to the quantization circuit 16. The intra-frame-coded data conceived as the transmission picture data S20 is thereby transmitted to the transmission buffer memory 3. Simultaneously, the relevant deviation data S14, i.e., the present frame data S12, is decoded as decoding deviation data S21 by the inverse transform circuit 19 and accumulated in the preframe memory 14.

After the picture data PC1 has been transmitted as the intra-frame-coded data, during the timing t₂ the picture data PC2 is supplied as the present frame data S12 to the subtractor circuit 13, at which time the picture data PC1 is supplied as the preframe picture data to the subtractor circuit 13 from the preframe memory 14. As a result, the subtractor circuit 13 obtains deviation data S14 corresponding to picture data PC12 (FIG. 1(B)) representing a deviation between the picture data PC2 serving as the present frame data S12 and the picture data PC1 serving as the preframe data S13.

As the transmission picture data S20, the deviation data S14 is transmitted to the transmission buffer memory 3 via the transform coding circuit 15, the quantization circuit 16, the variable-length coding circuit 17 and further the composition circuit 18. The transmission picture data S20 is decoded in the inverse transform circuit 19 and then supplied as the decoding deviation data S21 to the adder circuit 20.

At this time, the adder circuit 20 adds the decoding deviation data S21 to the preframe data S13 representing a picture which is moved a preframe picture held in the preframe memory as the picture data PC1 into a position sifted according to the motion vector data obtained from the motion detecting circuit 21. The present frame picture data is predicted on the basis of the preframe data and then held in the preframe memory 14.

Transmitted from the motion detecting circuit 21 at this moment are picture data PC1 as the preframe picture data held in the preframe memory 14 and the motion vector data S23 expressing a motion of the picture data which has come as the present frame data S12. An added result of the decoding deviation data S21 and the preframe picture data is stored in a vector position expressed by the motion vector data S23 in the preframe memory 14. The motion vector data S23 is simultaneously transmitted as the transmission picture data S20 via the composition circuit 18.

In the video signal coding circuit unit 2, when transmitting the picture data PC2 of t = t₂ (FIG. 1(A)), for obtaining inter-frame-coded data, the picture data PC12 representing a deviation between the preframe picture data PC1 and the present frame picture data PC2 is high-efficient-coded into inter-frame-coded data including the deviation data S14 and the motion vector data S23. The inter-frame-coded data is supplied to the transmission buffer memory 3.

Similarly at the timings t₃, t₄, ..., when new picture data comes as the present frame data S12, the present frame data S12 is high-efficient-coded into the inter-frame-coded data by employing the preframe picture data, viz., the preframe data S13 held in the preframe memory 14. The high-efficient-coded data is then transmissible to the transmission buffer memory 3.

The transmission buffer memory 3 receives the transmission picture data S20 sent in this manner. The memory 3 sequentially reads out the transmission picture data S20, as transmission data D_{TRANS}, which are temporarily stored therein, at a predetermined data transmitting velocity determined by a transmission capacity of the transmission path 4. The transmission data D_{TRANS} are transmitted to the picture data recording/reproducing device 5. On this occasion, a piece of remaining quantity data S25 representing an internally remaining data quantity is fed back to the quantization circuit 16 as quantization size control signals, thereby controlling a data generated quantity supplied as transmission picture data S20 from the video signal coding circuit unit 2.

When the data remaining quantity of the transmission buffer memory 3 increases up to an allowable upper limit, and if this situation stands as it is, there will probably be induced an overflow, exceeding the data quantity storable in the transmission buffer memory 3. The transmission buffer memory 3 execute the control to change the quantization step STEPG of the quantization circuit 16 to a larger value in accordance with the remaining quantity data S25. The data generated quantity of the quantization data S16 corresponding to the deviation data S14 is reduced to thereby decrease the data quantity of the transmission picture data S20. As a result, the overflow is preventing from taking place.

Whereas in the case of a drop of the remaining quantity data down to an allowable lower limit, and if this situation stands as it is, the transmission buffer memory 3 controls, because of an anxiety for an underflow, the quantization step STEPG of the quantization circuit 16 to a smaller value in accordance with the remaining quantity data S25. The data quantity of the transmission picture data S20 is incremented by increasing the data generated quantity of the quantization data S16 corresponding to the deviation data S14. The underflow is thus prevented from being caused in the transmission buffer memory 3.

As explained earlier, in the prior art picture data generaling device 1, the quantization step is controlled as a means for transmitting the significant picture information most efficiently while being adjusted to a transmitting condition under which the data transmitting velocity of the transmission data D_{TRANS} is regulated on the basis of the transmission capacity of the transmission path 4. It is because an emphasis is placed on an arrangement for keeping such a state that the data remaining quantity of the transmission buffer memory 3 invariably encounters no overflow or no underflow. This arrangement in turn may cause a remarkable deterioration of the picture quality associated with the picture data to be transmitted depending on a content thereof.

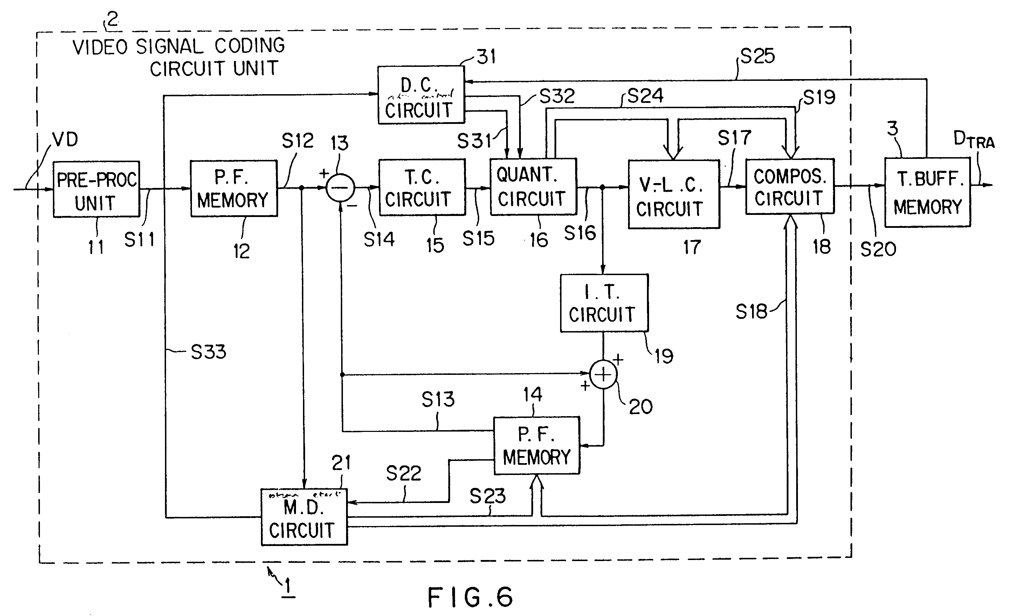

For example in a picture PCX of present frame data S12, as depicted in FIG. 5, a picture of upper half picture data PCX1 has a relatively small amount of significant picture information, whereas a lower half picture data PCX2 to be transmitted subsequent to the data PCX1 has an extremely large amount of significant picture information. In this case, when deviation data S14 corresponding to the upper half picture data PCX1 is quantized in the quantization circuit 16, the data generated quantity tends to decrease due to the small amount of significant picture information. Hence, the remaining quantity data S25 of the transmission buffer memory 3 changes to decrease. At this time, the upper half picture data PCX1 is quantized by a much finer quantization step by controlling the quantization step STEPG of the quantization circuit 16 to a smaller value. As a result, the data quantity of the transmission picture data S20 is incremented.

In contrast, when quantizing the deviation data S14 corresponding to the lower half picture data PCX2 subsequent to the data PCX1, the data generated quantity from the lower half picture data PCX2 tends to increase. Therefore, the remaining quantity data S25 of the transmission buffer memory 3 changes to increase At this time, the quantization circuit 16 is controlled to increment the quantization step STEPG, thereby quantizing the lower half picture data PCX2 by a much rougher quantization step. The data quantity of the transmission picture data S20 is reduced.

If such a measure is taken, however, a picture value of the lower half picture data PCX2 of the single quantized frame picture data is deteriorated more conspicuously than that of the upper half picture data PCX1. This probably brings about an uneasy impression when viewing the single picture as a whole.

Especially when recording the transmission data D_{TRANS} transmitted via the transmission path 4 on, e.g., a CD recording device, the data transmission quantity per frame, which is transmissible to the transmission path 4, is fixed. Before quantizing the lower half picture data PCX2, however, a relatively large data generated quantity is allocated to the upper half picture data PCX1 having the small amount of significant picture information. Hence, there is no choice but to transmit the lower half picture data PCX2 having the large amount of significant picture information within a range of a remaining data generated quantity. It is therefore impossible to avoid an outstanding deterioration of the picture quality.

After quantizing the upper half picture data PCX1 by a relatively small quantization step, and if the quantization circuit 16 goes on quantizing the lower half picture data PCX2 similarly by the small quantization step, the quantity of data supplied to the transmission buffer memory 3 as the transmission picture data S20 sharply increases because of the data PCX2 having the large significant picture information quantity. This leads to a situation where an overflow of the transmission buffer memory 3 will be produced.

In fact, however, in the construction of FIG. 4, the quantization circuit 16 restrains an increasing tendency of the remaining quantity data S25, if the data S25 abruptly increase. The quantization circuit 16 correspondingly functions to considerably reduce the quantity of data supplied to the transmission buffer memory 3 as the transmission picture data S20.

In consequence, the upper half picture data PCX1, having the small significant information quantity, of the present frame picture data PCX is quantized by a relatively small quantization size, thereby making it possible to transmit the data of a high quality picture. Whereas in the transmission of the lower half picture data PCX2 having the large significant information quantity, the picture data roughly quantized by incrementing the quantization step is to be transmitted. This results in an extreme deterioration of quality of the transmissible picture data.

Accordingly, there is proposed a system, as will be mentioned latter, which has been devised under such circumstances, to provide a video signal coding method capable of transmitting the picture data exhibiting a uniform quality of a single picture as a whole in terms of practicality when transmitting the picture data having a region in which an amount significant picture information to be transmitted is ununiform.

Furthermore, the method of the prior art is also insufficient for obtaining the transmission data which presents a high picture quality. Because this method is not arranged to reflect a nature of the picture to be coded.

Especially the properties of human spectral luminous efficacy is one of important conditions when estimating a quality of transmission picture. Unless this condition is satisfied, it is impossible to transmit the picture having a high quality in terms of practicality.

A first property of human spectral luminous efficacy is a visual masking effect. The masking effect is defined as such a phenomenon that when quantizing a complicated picture (containing a large amount of high frequency components) and a simple picture (containing a small amount of high frequency components) by the same quantization step, it is more difficult to detect a deterioration of quality of the complicated picture than the simple one.

Hence, even when roughly quantizing the complicated picture -if a picture information quantity is large- by a large quantization step, it follows that the deterioration of picture quality is undetectable by visual sense.

A second property of spectral luminous efficacy may be the Weber's law. According to the Weber's law, when giving a stimulus B to the human visual sense and varying the stimulus B by Δ B, the least threshold Δ B/B for sensing the variation Δ B is expressed as follows:$\frac{\text{ΔB}}{\text{B}} \text{= Constant}$ The Weber's law is defined as a phenomenon in which the least threshold becomes constant.

It is assumed that this phenomenon is applied to the quantization of a differential signal of the picture. A value of the differential signal to be quantized becomes larger with an increasing error Δ B thereof. This implies that the error is hard to be detected. Hence, the part of picture which shows a larger variation is quantized by a greater quantization step. It is difficult to detect a deterioration of picture quality even by such a method.

Accordingly, there is proposed a system, which has been devised under such circumstances, to provide a video signal coding method capable of generating transmission data showing still higher picture quality by utilizing visual properties associated with a picture to be quantized.

Furthermore the method of the prior art described above, for instance, where static and dynamic regions exist while being intermixed with each other, picture information which abruptly changes as in the case of a picture of an edge of, e.g., a moving object comes to a boundary between the static region and the dynamic region. In such picture information, as in the way with the prior art, the quantization step STEPG is controlled to cause a data remaining quantity of the transmission buffer memory 3 to fall within a predetermined range. In this case, there is caused an anxiety for generating noises in the picture part of the edge wherein the picture information abruptly varies.

In this connection, a human spectral luminous efficacy for a motion picture has such characteristics that the efficacy is low in the dynamic region (i.e., a region in which a motion appears) of the picture information, whereas it is high in the static region (viz., a region exhibiting no motion) thereof. Hence, where the static and dynamic regions exist in the mixed state, it is possible to prevent a deterioration of picture quality of the generated data in terms of properties of visual sense even by incrementing the quantization step STEPG used for quantizing the dynamic region. A quantization efficiency can, it is considered, be enhanced, correspondingly.

In fact, however, if rough quantization is effected by incrementing the quantization step STEPG for the dynamic region, and when quantizing such a boundary picture part that the picture information abruptly changes between the dynamic region and the static region in the data generated, this results in generation of noises in this boundary picture part.

This kind of phenomenon will probably appear in the boundaries of even the dynamic regions, if there are a plurality of regions exhibiting different motions.

Accordingly, there is proposed a system, which has been devised under such circumstances, to provide a video signal coding method capable of preventing a deterioration of picture quality of boundaries in such a case that a single picture contains a plurality of regions in which the picture information relatively varies.

Futhermore the method of the prior art described above is also insufficient for obtaining the transmission data which presents a high picture quality. Because this method is not arranged to reflect a nature of the picture to be coded.

Especially the properties of human spectral luminous efficacy is one of important conditions when estimating a quality of transmission picture. Unless this condition is satisfied, it is impossible to transmit the picture having a high quality in terms of practicality.

A first property of human spectral luminous efficacy is a visual masking effect. The masking effect is defined as such a phenomenon that when quantizing a complicated picture (containing a large amount of high frequency components) and a simple picture (containing a small amount of high frequency components) by the same quantization step, it is more difficult to detect a deterioration of quality of the complicated picture than the simple one.

As a means for increasing a transmission efficiency of video signals, if the complicated picture undergoes rough quantization by a large quantization step, it is considered that the significant picture information can be transmitted with a much higher efficiency without deteriorating the picture quality in terms of visual sense.

In fact, however, when examining a content of the picture, in the great majority of cases the picture information abruptly varies, as seen in the picture of, e.g., an object edge, in the boundary between the complicated picture region and the simple picture region. If such a picture is roughly quantized by a quantization step of a large value, this results in mosquito noses caused virtually in the edge part or generation of the transmission data which presents such a picture that the complicated picture region is not smoothly connected to the simple picture region.

Accordingly, there is proposed a system, which has been devised under such circumstances, to provide a video signal coding method capable of effecting quantization by which a quality of picture between a complicated picture region and a simple picture region is not deteriorated.

Futhermore in the thus constructed picture data generating system 1 (FIG. 1 to FIG. 4), the differential data S14 is discrete-cosine-transformed (DCT) in the transform coding circuit 15 to obtain the transform coding data S15. On this occasion, for a DCT coefficient, there is multiplied such a weighing function as to increase a weight to a low frequency component of a spatial frequency but decrease the weight to a high frequency component thereof. As a result, the quantization step STEPG relative to the high frequency component is incremented as compared with the quantization step STEPG relative to the low frequency components of the spatial frequency.

Namely, the quantization step STEPG relative to the high frequency component of the spatial frequency is made to increase, whereas the step STEPG relative to the low frequency component is made to decrease, thereby obtaining the picture data with a high efficiency while effectively preventing a deterioration of picture quality.

With this arrangement, there can be incremented weighting of a region where a human spectral luminous efficacy is relatively high and the deterioration is easily detected, whereas weighting of a region where the spectral luminous efficacy is low and the deterioration is hard to be detected can be decremented. Hence, a compression efficiency of the picture data is improved as well as enhancing a subjective picture quality. The transmission picture data S20 coded with a much higher efficiency can be obtained.

In fact, however, as discussed above, when the weighting function is limitlessly employed irrespective of a nature of the picture, the high frequency information is compressed to thereby fade the picture frequency, if the whole picture information quantity is small and the picture contains a good deal of high frequency components of the spatial frequency. This results in a problem of deteriorating the picture quality.

For instance, in case that there are only cross trips in a part of the picture to be transmitted, the picture contains high frequency components but no low frequency components, therefore if the high frequency information is compressed, then there is no signal for transmitting.

Accordingly, there is proposed a system, which has been devised under such circumstances, to provide a video signal transmission system capable of improving a compression efficiency of the picture data white preventing a deterioration of the picture quality by controlling a region in which a quantization step is changed on the basis of the whole picture information quantity.

### SUMMARY OF THE INVENTION

In view of the foregoing, an object of this invention is to provide a method of coding video signals, by which high-efficient-coded data can be obtained, a higher enhancement of the picture quality is attained by controlling a quantization step in accordance with a significant picture information quantity to be transmitted.

Another object of this invention is to provide a method of coding video signals, by which a quantization step is controlled in accordance with variations in picture information to be transmitted. Based on this method, a picture quality of the transmission data can further be improved.

The foregoing object has been achieved in a video signal coding method by which digital video signals S12 are quantized to high-efficient-coded data S16, there is provided the improvement characterized by comprising the steps of: distributing, to sub-regions RGS constituting a main region RGM, a main region transmission allowable data quantity BIT_{ALL} as a sub-region transmission allowable data quantity BIT corresponding to a digital video signal quantity ACC of the sub-regions RGS, the main region transmission allowable data quantity BIT_{ALL} being allocated to the main region RGM for indicating predetermined picture information to be transmitted; and determining a quantization step STEPG used for quantizing the digital video signals of the sub-regions RGS on the basis of the sub-region transmission allowable data quantity BIT.

In particular, according to the present invention there is provided a method for compressing a frame of video data to be transmitted comprising:
dividing a frame of video data into a plurality of sub-regions thereo;
discrete cosine transform coding the frame of video data for each sub-region to provide discrete cosine transform coded video data;
quantizing the discrete cosine transform coded video data with a quantizing step of a variable size for each sub-region to provide quantized video data;
variable length coding the quantized video data to provide a variable length code being transmitted through a transmission buffer memory; and
controlling the size of quantizing step, said step of controlling determing said size of quantizing step of the sub-region in accordance with a generated amount of video data of the sub-region;
   wherein said step of quantizing quantizes the discrete cosine transform coded video data with the determined quantizing step for each sub-region.

Concerning to a modification, in a video signal coding method by which digital video signals S12 are quantized to high-efficient-coded data S16, there is provided the improvement characterized by comprising the step of: determining a quantization step STEPG used for quantizing the digital video signals of sub-regions RGS on the basis of a ratio of a digital video signal quantity ACC_{ALL} of a main region RCM for indicating predetermined picture information to be transmitted to a digital video signal quantity ACC of the sub-regions RGS constituting the main region RGM.

Concerning to another modification, in a video signal coding method by which digital video signals S12 are quantized to high-efficient-coded data S16, there is provided the improvement characterized by comprising the steps: obtaining a quantization step STEPG proportional to a digital video signal quantity ACC with respect to sub-regions RGS constituting a main region RGM for indicating predetermined picture information to be transmitted; and generating a constant amount of data from the sub-regions RGS by quantizing the digital video signals of the sub-regions, employing the quantization step STEPG.

The foregoing object has been achieved in a video signal coding method by which digital video signals S14 are quantized by a quantization step STEPG to generate transmission data S16, there is provided the improvement characterized by comprising the steps of obtaining differential information DIFF representing variations both in first picture information ACC of a coded picture region RGS₀ and in second picture information ACC_{K} of an adjacent picture region RGS_{K} adjacent to the coded picture region RGS₀; and determining a quantization step STEPG used for quantizing a digital video signal of the coded picture region RGS₀ on the basis of the differential information DIFF.

In particular, according to the present invention, there is provided a method for compressing a frame of video data to be transmitted, comprising:
dividing a frame of video data into a plurality of sub-regions thereof;
discrete cosine transform coding the frame of video data for each sub-region to provide discrete cosine transform coded video data;
quantizing the discrete cosine transform coded video data with a quantizing step of a variable size of each sub-region to provide quantized video data;
variable length coding the quantized video data to provide a variable length code being transmitted through a transmission buffer memory; and
controlling the size of quantizing step, said step of controlling comprising detecting a change information representing changes between an amount of video information of the sub-region to be coded and each amount of video information of surrounding sub-regions and determining the size of quantizing step of said sub-region to be coded in accordance with said detected change information;
   wherein said step of quantizing quantizes the discrete cosine transform coded video data with the determined quantizing step for each sub-region.

Accordingly, the quantization step STEPG is set to a value corresponding to the digital video signal quantity ACC of the sub-regions. With this arrangement, it is possible to generate the transmission data having its data quantity corresponding to the significant picture information quantity of the sub-regions, thereby obtaining the high-efficient-coded data as the transmission data which cause no partial deterioration of the picture quality.

Accordingly, determined is the quantization step STEPG for quantizing the coded picture region RGS₀ in accordance with an amount of variations in the picture information of the adjacent picture region RGS_{K} as well as in the coded picture region RGS₀. The picture parts in which the picture information, as seen in, e.g., the object edge, sharply changes are quantized finely by use of a small quantization step STEPG. Thus, the picture parts exhibiting the sharp variations can be quantized to the transmission data having a high picture quality. As a result, the picture parts can smoothly be connected. Besides, it is feasible to readily generate the transmission data in which noises are effectively restained.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
FIG. 1 is a schematic diagram of assistance in explaining a high-efficient-coding process;
FIG. 2 is a block diagram depicting a prior art picture data generating system;
FIG. 3 is a characteristic curvilinear diagram of assistance in explaining a quantization step;
FIG. 4 is a block diagram illustrating a detailed construction of FIG. 2;
FIG. 5 is a schematic diagram of assistance in explaining present frame picture data to be transmitted;
FIG. 6 is a block diagram illustrating a picture data generating system making use of a video signal coding method of the present invention;
FIG. 7 is a flowchart showing a first embodiment of the video signal coding method of the invention;
FIG. 8 is a schematic diagram of assistance in explaining regions to which coding steps are allocated;
FIGS. 9 through 13 are flowcharts showing a first through fifth modifications of the first embodiment;
FIG. 14 is a flowchart showing a second embodiment of the video signal coding method of the invention;
FIGS. 15 and 16 are flowcharts showing a third embodiment of the video signal coding method of the invention;
FIG. 17 is a schematic diagram of assistance in explaining a method of detecting a content of picture information;
FIG. 18 is a flowchart showing a modification of the third embodiment;
FIG. 19 is a flowchart showing a fourth embodiment of quantization step calculating procedures of a data control circuit 31 thereof;
FIG. 20 is a schematic diagram of assistance in explaining a coded sub-region and adjacent sub-regions;
FIG. 21 is a block diagram of an entire construction of a video signal transmission system, showing the fifth embodiment of the present invention;
FIG. 22 is a schematic diagram showing a method of dividing frame data thereof;
FIGS. 23 and 24 are flowcharts showing operations of a weighting control circuit;
FIG. 25 is a schematic diagram of assistance in explaining a weighting coefficient; and
FIG. 26 is a chart showing a weighting coefficient table.

### DETAILED DESCRIPTION OF THE INVENTION

Preferred embodiments of this invention will be described with reference to the accompanying drawings.

### (1) First Embodiment of The Invention

In FIG. 6, the components corresponding to those of FIG. 4 are marked with the like symbols. Referring to FIG. 6, a quantization step of a quantization circuit 16 is controlled by a quantization step control signal S31 and an overflow/underflow preventive signal S32 which are given from a data control circuit 31.

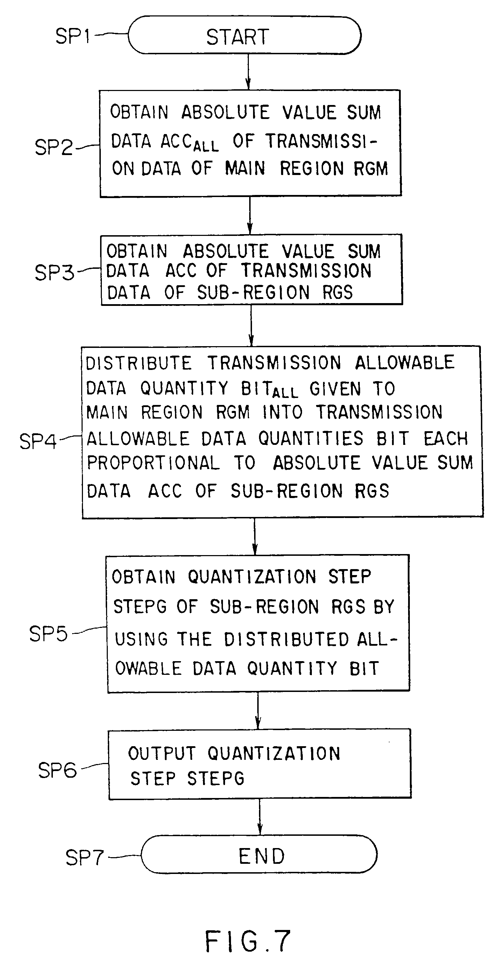

In the data control circuit 31, there is allocated a transmission allowable data quantity corresponding to a significant picture information quantity with respect to a picture part of each frame to be transmitted in quantization step calculating procedures shown in FIG. 7 on the basis of transmission data information S33 obtained from a motion detecting circuit 21 and quantization data S16 of the quantization circuit 16. Subsequently, the picture data having a uniform quality over the entire picture is quantized as well as being made adequate so as not to cause an overflow or underflow in a transmission buffer memory 3.

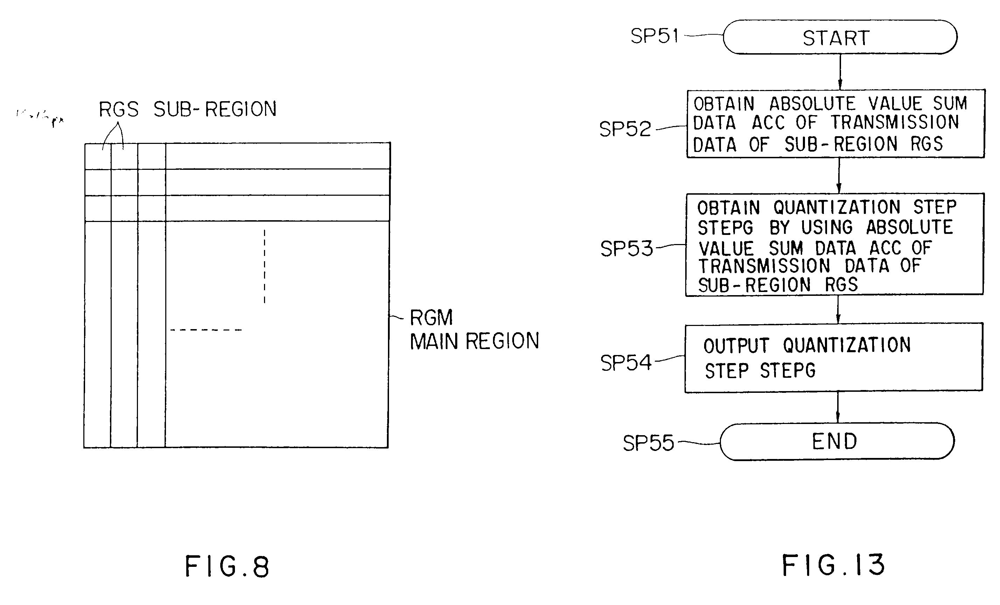

In the quantization step calculating procedures of FIG. 7, as illustrated in FIG. 8, the data control circuit 31 divides a main region RGM serving as a 1-frame picture into sub-regions RGS of a 16 pixels x 16 pixels transmission unit block. The circuit 31 then quantizes, to transmission data, respective pixel data DATA constituting significant picture information of the sub-regions RGS.

To be more specific, when the data control circuit 31 enters the quantization step calculating procedures at a step SP1, absolute value sum data ACC_{ALL} of the transmission data of the main region RGM at a step SP2 is given by:${\text{ACC}}_{\text{ALL}} {\text{= Σ}}_{\text{RGM}} \text{| DATA |}$

In the formula (2), the pixel data DATA indicates pixel transmission data constituting the main region RGM. An absolute value sum of the pixel transmission data DATA is computed with respect to the main region RGM, thereby obtaining the main region absolute value sum data ACC_{ALL} representing a total data quantity (i.e., a significant picture information quantity of the main region) to be transmitted in connection with the main region RGM.

In this embodiment, when transmitting intra-frame-coded data, the pixel transmission data DATA consists of differential data indicating a difference between a mean value of the pixel data (transmission unit block data composed of pixel data of 16 x 16 = 256 pixels) contained in the sub-regions RGS and each pixel data. When transmitting inter-frame-coded data, the pixel transmission data DATA consists of deviation data indicating a deviation between present frame pixel data and preframe pixel data with respect to respective pixels contained in the sub-regions RGS.

After carrying out such processes, the data control circuit 31 moves to a step SP3 to compute absolute value sum data ACC of the pixel transmission data DATA (viz., transmission unit block data) contained in the sub-regions RGS. The data ACC is expressed such as:${\text{ACC = Σ}}_{\text{RGS}} \text{| DATA |}$

As a result, a significant picture data quantity of the sub-regions RGS is obtained.

In the wake of the step, the data control circuit 31 distributes a transmission allowable data quantity BIT_{ALL} given to the main region RGM into sub-region transmission allowable data quantities BIT each having a value proportional to the absolute value sum data ACC in connection with the sub-region RGS at a step SP4. The sub-region transmission allowable data quantity BIT is given by:${\text{BIT = BIT}}_{\text{ALL}} \text{x} \frac{\text{ACC}}{{\text{ACC}}_{\text{ALL}}}$

The main region transmission allowable data quantity BIT_{ALL} involves the use of a statistically predicted value for its transmission via a transmission path 4 without causing no deficiency and no excess on the basis of a data generated quantity on the occasion of transmission of the inter-frame-coded data or the intra-frame-coded data which was virtually executed in the past. Subsequently, at a step SP5 the data control circuit 31 obtains a quantization step STEPG of each sub-regions RGS by use of the distributed transmission allowable data quantity BIT in the following formula (5).$\text{STEPG = K x} \frac{\text{ACC}}{\text{BIT}}$

The data control circuit 31 sends the quantization step STEPG as a step control signal S31 to the quantization circuit 16 at a step SP6. Thereafter, the quantization step calculating procedures come to an end at a step SP6. The quantization steps in the quantization circuit 16 are controlled for every sub-region RGS by employing the quantization step STEPG obtained at the step SP5.

Based on the arrangement described above, with one-frame significant picture information being quantized, the large transmission allowable data quantity BIT can be distributed to the picture part having a good deal of significant picture information. Values of the quantization steps STEPG associated with one-frame picture as a whole can be made uniform in terms of practicality. Thus, it is feasible to transmit the picture data exhibiting a practically uniform picture quality in the respective picture parts of the signal picture.

When determining the quantization step STEPG in conformity with the formula (5), as will be mentioned later, a theoretically proper quantization step STEPG can be selected.

Namely, a data generated quantity [bit] in arbitrary sub-regions RGSX constituting the main region RGM is generally expressed by:${\text{Data Generated Quantity [bit] = Σ}}_{\text{RGSX}} \text{{ Code Length (} \frac{\text{|Objective Data|}}{\text{Quantization Step}} \text{) }}$

As expressed in this formula, the data generated quantity is obtained by integrating the code length determined by a value acquired by dividing an absolute value of the objective data for quantization by the quantization step with respect to an arbitrary sub-regions RGSX.

Supposing that there is adapted such a coding method (e.g., a VLC method) that [Code Length] is substantially proportional to [|Objective Data| / Quantization Step] a relationship between [|Objective Data| / Quantization Step] and the data generated quantity is expressed such as:${\text{Data Generated Quantity ∝ Σ}}_{\text{RGSX}} \text{(} \frac{\text{|Objective Data|}}{\text{Quantization Step}} \text{)}$ As is obvious from this, a proportional relationship is established. If this relationship is modified as follows:$\text{Data Generated Quantity ∝} \frac{{\text{Σ}}_{\text{RGSX}} \text{|Objective Data|}}{\text{Quantization Step}}$ Thus, it can be understood that there is established a proportional relationship between an integrating result obtained by integrating the absolute value of the objective data in association with the sub-regions RGSX and the data generated quantity.

Hence, the data generation quantity can be expressed such as:$\text{Data Generated Quantity = K x} \frac{{\text{Σ}}_{\text{RGSX}} \text{|Objective Data|}}{\text{Quantization Step}}$ where K is the proportional coefficient. The quantization step is thereby given by:$\text{Quantization Step = K x} \frac{{\text{Σ}}_{\text{RGSX}} \text{|Objective Data|}}{\text{Data Generated Quantity}}$

As shown above, the quantization step is expressed by the formula wherein a value, which is obtained by dividing the integrating value of the objective data in the sub-regions RGSX by the data generated quantity, is multiplied by the proportional coefficient K.

when considering the formula (5) in terms of this theoretical analysis result, and if the sub-region transmission allowable data quantity BIT can be allocated as a data generated quantity in the formula (10), it is apparently possible to determine a quantization step value needed for generating the data having a quantity equivalent to the allocated sub-region transmission allowable data quantity.

The proportional coefficient K can be known by experience. For example, if the pictures each presenting a similar nature continue (i.e., there is an autocorrelativity as in the case of video signals), the proportional coefficient K is substantially constant in terms of the correlativity of the pictures.

Hence, if the proportional coefficient K and the data integrating value in the sub-regions RGS are known, the quantization step can be obtained directly by a feedforward method (instead of using, as in the prior arts, the feedback method) on condition that the quantity of data to be generated is specified.

### First Modification of First Embodiment

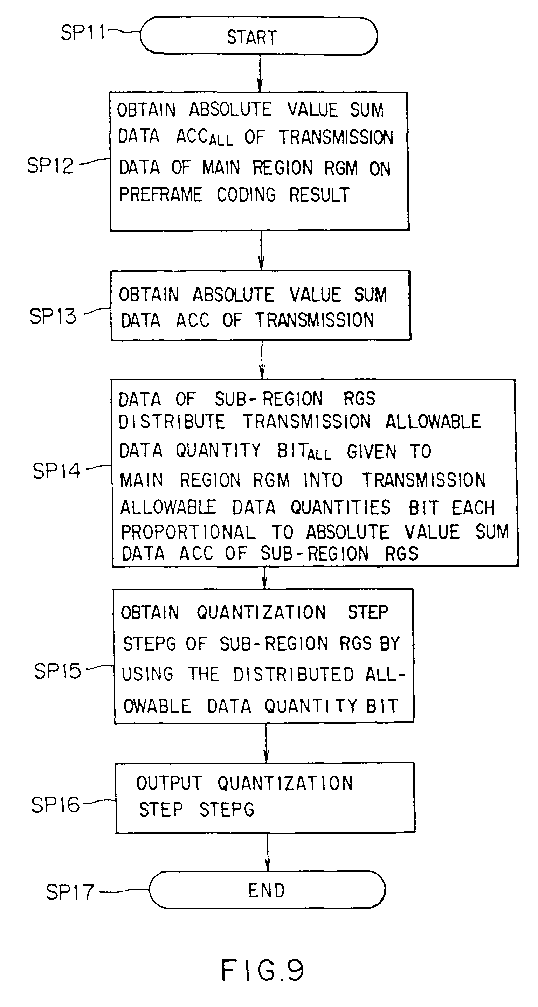

FIG. 9 shows a first modification of the first embodiment. In accordance with the first embodiment shown in FIG. 7, the data control circuit 31 is arranged to obtain the absolute value sum data ACC_{ALL} of the transmission data in the main region RGM at the step SP2 from the present frame data which is to be transmitted at present. In the case of FIG. 9, the data ACC_{ALL} is obtained from a result of preframe coding.

More specifically, in the case of FIG. 9, for calculating the quantization step STEPG in the present frame, the data control circuit 31 at first makes use of, when entering the quantization step calculating procedures at a step SP11, the absolute value sum data ACC_{ALL} of the transmission data which is obtained with respect to the main region RGM of the preframe from the result of preframe coding at a step SP12.

In this case, at steps SP13, SP14, SP15 and SP16 the data control circuit 31 thereafter executes the same arithmetic operations as those of the steps SP3, SP4 and SP5 of FIG. 7. After this execution, the quantization step calculating procedures are terminated at a step SP17.

According to the arrangement of FIG. 9, the absolute value sum data ACC_{ALL} is obtained on the basis of the preframe data, and the necessity for waiting for a process relative to the present frame is thereby eliminated. It is feasible to further simplify the construction as a whole and the process procedures, correspondingly. With this arrangement, as in the case of FIG. 7, similarly the quantization step can adequately be controlled.

In this connection, there exists such a nature that the autocorrelativities between the consecutive frames are large in the case of the video signals. Based on this nature, the absolute value sum data ACC_{ALL} of the transmission data associated with the main region RGM of the preframe, it can be considered, exhibits no difference in terms of practicality in comparison with the absolute value sum data ACC_{ALL} of the transmission data associated with the main region RGM of the present frame. Therefore, the quantization step STEPG which is sufficiently adequate in practicality can be calculated even by the absolute value sum data ACC_{ALL} of the relevant preframe with that of the present frame.

### Second Modification of First Embodiment

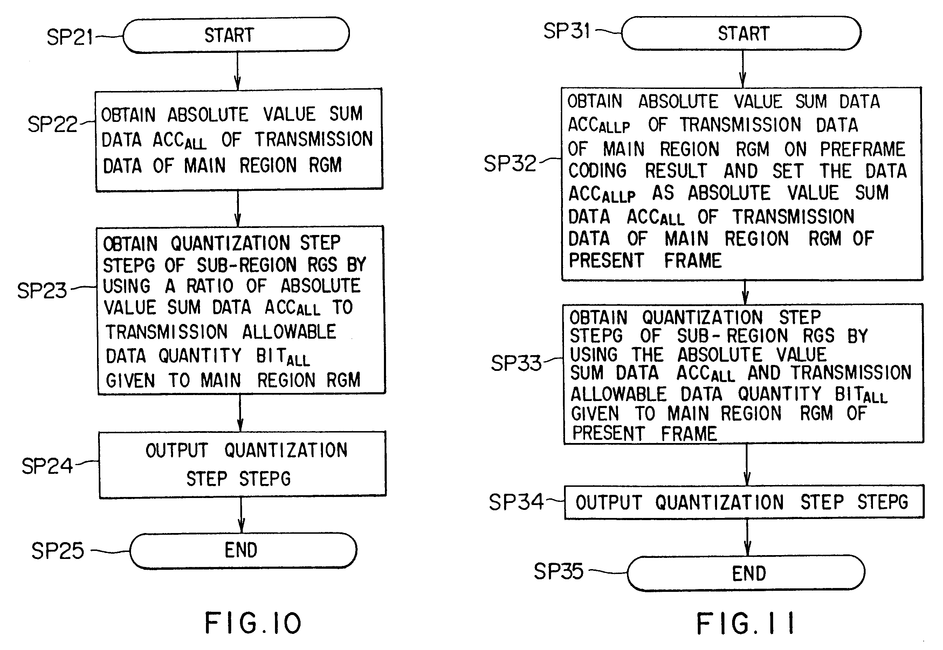

FIG. 10 shows a second modification of the first embodiment. In this second modification, the data control circuit 31 obtains the quantization step from the absolute value sum data ACC_{ALL} of the transmission data associated with the main region RGM and from a transmission allowable data quantity BIT_{ALL}.

That is, the data control circuit 31 enters the quantization step calculating procedures at a step SP21. By using the transmission allowable data quantity BIT_{ALL} given to the main region RGM at a step SP23 after obtaining the absolute value sum data ACC_{ALL} of the transmission data relative to the main region RGM at a step SP22, the quantization step STEPG is given by:$\text{STEPG = K x} \frac{{\text{ACC}}_{\text{ALL}}}{{\text{BIT}}_{\text{ALL}}}$ After transmitting the quantization step STEPG to the quantization circuit 16 at a step SP24, the procedures come to an end at a step SP25.

When transform coding data S15 with respect to the sub-regions belonging to the main region RGM reaches the quantization circuit 16 (FIG. 6), the data control circuit 31 executes the quantization by use of the quantization step STEPG common to all the sub-regions RGS.

In accordance with the embodiment of FIG. 10, there is employed the quantization step STEPG common to all the sub-regions RGS belonging to the main region RGM. A ratio for differential data of the quantization step STEPG is small in the sub-regions having a large difference in the main region RGM. The quantization is therefore effected to increment the data generation quantity. Whereas in the sub-regions having a small difference, the ratio for the differential data of the quantization step STEPG is large, thereby performing the quantization to decrement the data generated quantity.

In connection with the main region transmission allowable data quantity BIT_{ALL} allocated to the main region RGM, the large transmission allowable data can be allocated to the regions requiring a large data quantity among the respective regions of the frame picture data. This eliminates a possibility of generating such transmission data as to partially deteriorate the picture quality over the entire main region RGM. The transmission having the high picture quality can be generated correspondingly.

With the respect to the respective sub-regions combined to form the main region RGM, the quantization step STEPG obtained by the formula (11) can be acquired, as in the first embodiment described referring to FIGS. 6 through 8. by distributing the main region transmission allowable data quantity BIT_{ALL} in accordance with a distribution of the significant picture information quantities of the sub-regions RGS constituting the main region RGM.

Namely, a modification is effected by substituting the formula (4) into the sub-region transmission allowable data quantity BIT of the formula (5). The quantization step STEPG is given as follows:$\text{STEPG = K x} \frac{\text{ACC}}{{\text{BIT}}_{\text{ALL}} \text{x} \frac{\text{ACC}}{{\text{ACC}}_{\text{ALL}}}}$

There is a transforming method to establish a proportional relationship between the sub-region transmission allowable data quantity BIT and the main region transmission allowable data quantity BIT_{ALL} in the formula (4). When transforming the data in the transform coding circuit 15 by the above-mentioned transforming method, by erasing the absolute value sum data ACC of the numerator and denominator, the formula (12) can be arranged as follows:$\text{STEPG = K x} \frac{{\text{ACC}}_{\text{ALL}}}{{\text{BIT}}_{\text{ALL}}}$

The right side of the formula (13) does not contain the sub-region absolute value sum data ACC. This gives the following implication. Even when the distribution of the picture significant information associated with the sub-regions RGS included in the main region RGM is unknown, and if the main region absolute value sum data ACC_{ALL} with respect to the whole main region RGM can be obtained, there can be produced the same effect as that yielded when allocating the main region transmission allowable data quantity BIT_{ALL} on the basis of the distribution of the significant picture information quantity for the sub-regions RGS. This is attainable simply by determining the quantization step STEPG common to all the sub-regions RGS in accordance with the main region transmission allowable data quantity BIT_{ALL} given to the main region RGM.

In the embodiment of FIG. 10, it is possible to properly allocate, to the sub-regions RGS, the main region transmission allowable data quantity BIT_{ALL} imparted to the main region RGM. The transmission data presenting a good picture quality can thus be generated.

### Third Modification of First Embodiment

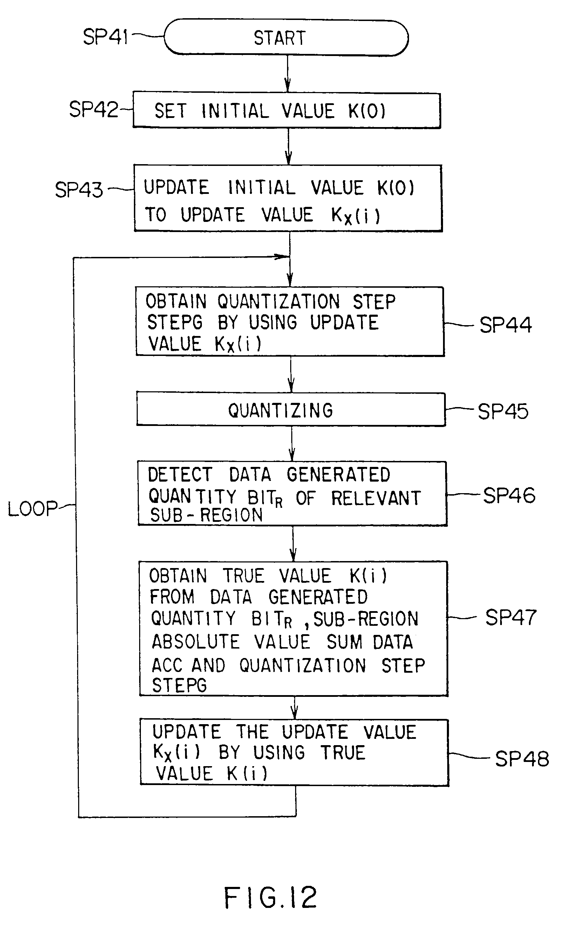

Turning to FIG. 11, there is shown a third modification of the first embodiment. The absolute value sum data ACC_{ALL} is obtained on the basis of the coding result of the present frame at the step SP22 in FIG. 10. Instead of this, the data ACC_{ALL} is obtained on the basis of the coding result of the preframe in the third modification.

To be specific, the data control circuit 31 obtains, when coming into the quantization step calculating procedures, absolute value sum data ACC_{ALLP} of the transmission data with respect to the main region RGM on the basis of the preframe coding result at a step SP32. The obtained data ACC_{ALLP} serves as the absolute value sum data ACC_{ALL} of the transmission data of the main region RGM of the present frame.

The data control circuit 31 performs the arithmetic operation of the formula (13) at a subsequent step SP33 by using the absolute value sum data ACC_{ALL} and the transmission allowable data quantity BIT_{ALL} given to the main region RGM of the present frame, thus obtaining the quantization step STEPG of the sub-regions RGS. After transmitting the quantization step STEPG to the quantization circuit 16 at a step SP34, the quantization step calculating procedures are terminated at a step SP35.

In accordance with the embodiment of FIG. 11, the absolute value sum data ACC_{ALLP} of the present frame is employed as the absolute value sum data ACC_{ALL} of the present frame. This in turn enables an execution of quantization associated with the present frame while the absolute value sum data ACC_{ALL} remains unknown. In consequence, the construction for executing the quantizing process and the process procedures can further be simplified, and hence the deterioration of picture quality of the transmission data can be prevented in terms of practicality.

The video signal characteristically has a large correlativity in picture content between the frames. Therefore, an error between the absolute value sum data ACC_{ALLP} of the preframe and the absolute value sum data ACC_{ALL} of the present frame is practically sufficiently reduced. Thus, it is feasible to avoid a possibility of deteriorating the picture quality or improperly incrementing or decrementing the remaining quantity of the transmission butler memory 3 even when obtaining the quantization step STEPG on the basis of the preframe picture data.

### Fourth Modification of First Embodiment

Referring to FIG. 12, there is illustrated a fourth modification of the first embodiment. In the first embodiment and the first through third modifications discussed with reference to FIGS. 6 to 11, the proportional coefficient K is set beforehand to a predetermined value. The fourth modification of FIG. 12 aims at enhancing an accuracy of the proportional coefficient K by learning when sequentially quantizing the picture data of the consecutive frames.

In FIG. 12, the data control circuit 31 initiates proportional coefficient updating procedures at a step SP41. The circuit 31 sets an initial value K(0) for every sub-region (therefore, per transmission unit block) at a step SP42. At the next step SP43, the initial value K(0) is updated to an update value K_{X}(i).

In this embodiment, there is employed the initial value K(0) which is previously inputted from the outside to the data control circuit 31.

The data control circuit 31 finishes the initialization and executes a process to transmismit a quantization step control signal S31 to the quantization circuit 16 according to an initializing status.

More specifically, by using the update value K_{X}(i) which has become the initial value K(0) at a step SP44, as in the way with the formula (5), the quantization step STEPG is given by:${\text{STEPG = K}}_{\text{X}} \text{(i) x} \frac{\text{ACC}}{\text{BIT}}$ Thereafter, the quantization is executed in the quantization circuit 16 by use of the quantization step STEPG at a step SP45.

At this moment, the quantization circuit 16 generates quantization data S16 pertaining to the picture data of the sub-regions RGS. At a subsequent step SP46, however, the data control circuit 31 detects a data generated quantity BIT_{R} of the sub-regions RGS on the basis of the quantization data S16. At the next step SP47, from the data generation quantity BIT_{R}, the sub-region absolute value sum data ACC obtained by the formula (3) and the quantization STEPG obtained at the step SP44, a true value K(i) is given as follows:$\text{K(i) = STEPG x} \frac{{\text{BIT}}_{\text{R}}}{\text{ACC}}$

In this connection, the formula (15) implies that the above-mentioned relationship shown in the formula (10) is transformed into a formula for obtaining the proportional coefficient K preparatory to its application.

In the wake of this step, at a step SP48 the data control circuit 31 executes an arithmetic operation of the following formula.${\text{K}}_{\text{X}} {\text{(i + 1) = α K}}_{\text{X}} \text{(i) + (1 - α ) K(i)}$ A new update value K_{X}(i + 1) is thereby obtained. This update value is updated to an update value K_{X}(i) to be applied on the occasion of quantization of the next frame.

In the formula (16), α represents a mixing ratio. The new update value K_{X}(i + 1) is mixed with the update value K_{X}(i) used in the present frame and the true value K(i) at the mixing ratio α. It is indicated that the update value K_{X}(i) employed for quantization is modified by the true value K(i).

There is developed a state where the update value K_{X}(i) used for quantizing the picture data of the next frame is modified to a proper update value, referring to the actually generated data generated quantity BIT_{R} by learning from the quantization by use of the update value K_{X}(i) corresponding to the initial value K(0). The data control circuit 31 launches on a process of the next frame, reverting from this state to the step SP44 via a respective loop LOOP.

At this moment, the data control circuit 31 executes processing of the repetitive loop LOOP cosisting of the steps SP44 - SP45 - SP46 - SP47 - SP48 - SP44 with respect to the next frame. After effecting the quantization by use of the quantization step STEPG obtained on the basis of the update value K_{X}(i) acquired in association with the present frame, the new update value K_{X}(i) while obtaining the true value K(i) on the basic of the data generated quantity BIT_{R} generated by the quantization of the preframe with respect to the picture data of the sequential frames in the similar manner.

The data control circuit 31 goes on updating the new update value K_{X}(i) while learning the result of the quantization executed repeatedly, thereby obtaining a proportional coefficient which adequately works corresponding to variations in the significant picture information to be transmitted as a proportional coefficient K in each sub-region.

### Fifth Modification of First Embodiment

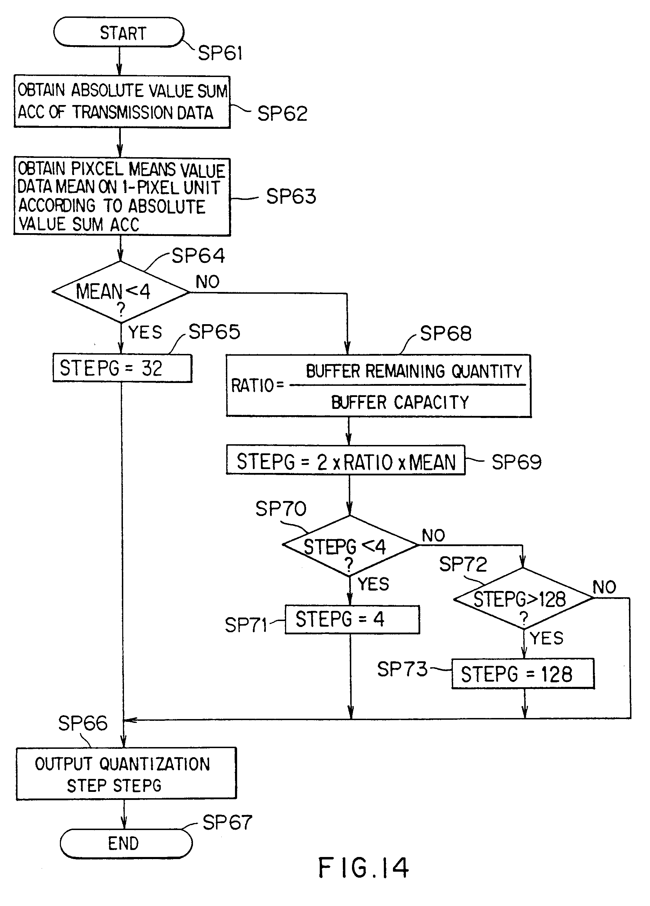

Turning to FIG. 13, there is illustrated a fifth modification of the first embodiment. In this case, the data control circuit 31 serves to lessen the deterioration of the picture quality by allocating such a quantization step STEPG as to make the data generated quantity uniform with respect to all the sub-regions RGS combined to form the main region RGM (FIG. 8).

That is, the data control circuit 31 initiates the quantization step calculating procedures at a step SP51 in FIG. 13. At a step SP52, the absolute value sum data ACC of the transmission data in regards to all the sub-regions RGS is given by the following formula.${\text{ACC = Σ}}_{\text{RGS}} \text{|DATA|}$ Thereafter, by employing this absolute value sum data ACC, the quantization step STEPG is given by:$\text{STEPG = K1 x ACC}$ The quantization step calculating procedures then come to an end at a step SP54.

In the formula (18), K1 is the proportional coefficient obtained from the above-described relationship in the formula (10).

Namely, from the relationship of the formula (10) the quantization step STEPG has the following relationship with each sub-region RGS.$\text{STEPG = K x} \frac{\text{ACC}}{\text{BIT}}$ The data generated quantity BIT relative to each sub-region RGS is, as will be shown in the following formula, set to a common constant value C.$\text{BIT = C}$

Under this condition, the formula (20) is substituted into the formula (19), so the formula (19) can be modified as follows:$\text{STEPG =} \frac{\text{K}}{\text{C}} \text{x ACC}$ The formula (18) is obtained by placing the first term of the right side of the formula (21) as follows:$\text{K1 ≡} \frac{\text{K}}{\text{C}}$

According to the arrangement shown in FIG. 13, as expressed by the formula (18), the quantization step STEPG is controlled to a value proportional to the absolute value sum data ACC. It is therefore feasible to allocate such a quantization step STEPG as to generate the same data quantity with respect to all the sub-regions RGS constituting the main regions RGM. This in turn enables generation of the transmission data by which the extreme deterioration, described in conjunction with FIG. 5, of the picture quality can be prevented.

### Other Modifications of First Embodiments

(1-1) The first embodiment and the modifications thereof discussed above have dealt with a case where as a unit for setting the quantization step STEPG, there are set the sub-regions RGS per single transmission unit block for the main region RGM composed of one-frame picture. The sizes of the main region RGM and of the sub-regions RGS are not limited to the above-mentioned ones. A variety of sizes are available.
   Namely, a plurality of frames may be selected as a main region RGM. In this case, as sub-regions RGS, there may be selected one frame, or a plurality of transmission unit blocks, or a single transmission unit block.
   Besides, as the main region RGM, there can be set one frame, or a plurality of divided regions formed by dividing one frame. In this case, a plurality of transmission unit blocks or a single transmission unit block may be set as the sub-regions RGS.
(1-2) In the fourth modification of the first embodiment explained referring to FIG. 12, the update value K_{X}(i) is updated by using the true value K(i) at the step SP48. Exemplified is an arrangement in which, as expressed by the formula (16), as the update value K_{X}(i + 1), there is employed a composite value of the true value K(i) obtained on the basis of the data generated quantity BIT_{R} generated actually from the present frame at the ratio ∝ and the update value K_{X}(i) employed for quantizing the present frame. The following formula is a substitute for this.${\text{K}}_{\text{X}} \text{(i + 1) = K(i)}$ As shown in this formula, the true value K(i) obtained from the actual data generated quantity BIT_{R} of the present frame is set directly to the update value K_{X}(i + 1) used for quantizing the next frame. This also yields the same effect as that in the previous case, wherein the proportional coefficient K is made appropriate for variations in the picture of the sub-regions RGS.
(1-3) The first embodiment and modifications thereof other than the fourth modification of the first embodiment described with reference to FIG. 12 have been stated as below. When obtaining the quantization step STEPG, as in the way with the first embodiment and the first through third modifications thereof (FIGS. 6 to 11, the transform coding circuit 15 executes the transform co coding process by such a transforming method that the data generated quantity is proportional to [Σ _{RGSX} |Objective Data| / Quantization Step]. Instead of the proportional coefficient K, however, the same effect as the above-mentioned one can be exhibited even when applying the transform coding circuit 15 which uses a transforming method expressible by a predetermined approximate expression.

As discussed above, the first embodiment of this invention and modifications thereof exhibits the following advantages. The quantization step for the frame to be transmitted is determined depending on a ratio of of an amount of data to be transmitted to a previously allocated data transmission allowable quantity. With this arrangement, the picture quality of the transmission data can be made appropriate in accordance with the significant picture information quantity. It is therefore possible to easily attain the video signal coding method capable of effectively preventing the single picture from being partially deteriorated to an extreme degree as is often the case with the prior arts.

### (2) Second Embodiment

In FIG. 6, the components corresponding to those of FIG. 4 are marked with the like symbols. Referring to FIG. 6, a quantization step, employed for effecting quantization, of a quantization circuit 16 is controlled by a quantization step control signal S31 given from a data control circuit 31.

On the basis of transmission data information S33 obtained from a motion detecting circuit 21, the data control circuit 31 quantizes a picture part of each frame to be transmitted by a quantization step STEPG corresponding to a significant picture information quantity (i.e., a differential data quantity indicated by deviation data S14 obtained from a subtractor circuit 13) to be coded in accordance with quantization step calculating procedures shown in FIG. 14. The picture information of each picture part can thus be quantized by the quantization step STEPG corresponding to a nature of the information, thereby generating the transmission data which is appropriate in term of properties of spectral luminous efficacy.

In the quantization step calculating procedures of FIG. 14, as illustrated in FIG. 8, the data control circuit 31 divides a main region RGM serving as, e.g., a 1-frame picture into sub-regions RGS consisting of a 16 pixels x 16 pixels transmission unit block. The circuit 31 then quantizes, to transmission data, respective pixel data DATA constituting significant picture information, which is to be coded, of the sub-regions RGS.

To be more specific, when the data control circuit 31 enters the quantization step calculating procedures at a step SP61 of FIG. 14, at a step SP62 an absolute value sum ACC of transmission data DATA per transmission unit block (viz., for every sub-regions RGS) is given by:${\text{ACC = Σ}}_{\text{RGS}} \text{|DATA|}$ Thereafter, at a step SP63 a mean value arithmetic operation is executed as follows:$\text{MEAN =} \frac{\text{ACC}}{\text{16 x 16}}$ The pixel mean value data MEAN per one-pixel unit is thus obtained on the basis of the absolute value sum ACC.

The one-frame picture data represents a distribution of significant picture information quantities according to each transmission unit block (i.e., individual sub-regions RGS). Besides, it is feasible to known a state where the distribution of the significant picture information is obtained as one-pixel unit data.

In this state, the data control circuit 31 moves to a step SP64. The first estimation reference value EST1 is set as follows:$\text{EST1 = 4}$ By using a value [4] set as the first estimation reference value EST1, there is made a judgement as to whether or not the pixel mean value data MEAN is smaller than the first estimation reference value EST1 = 4.

A value of the first estimation reference value EST1 is herein set to a value corresponding to a noise level. If the answer is affirmative at a step SP64, this implies that no significant picture information to be transmitted is present in the sub-regions RGS, and even if some variations in the pixel data DATA can be seen, the variations may be considered as noises. In this case, the data control circuit 31 shifts to a step SP65. The quantization step STEPG is, as expressed in the following formula, set to a numerical value, e.g., [32], remarkably greater than the noise level.$\text{STEPG = 32}$ This quantization step STEPG is outputted as a quantization step control signal S31 to the quantization circuit 16 at a step SP66. Thereafter, the quantization step calculating procedures come to an end at a step SP67.

For the transmission unit block in which the pixel means value data MEAN contains the pixel data DATA of the noise level, the data control circuit 31 effects the control to develop such a state that the data is not allowed to be transmitted as the quantization data S16 from the quantization circuit 16 (i.e., a state where the data of numerical value [0] is transmitted) by setting the quantization step STEPG to a value greater than the noise level.

Where as if negative at the step SP64, this indicates that the significant picture information to be transmitted exists in the transmission unit block. then, the data control circuit 31 moves to a step SP68 and obtains a buffer remaining quantity ratio RATIO by the following formula.$\text{RATIO =} \frac{\text{Buffer Remaining Quantity}}{\text{Buffer Capacity}}$ The circuit 31 further moves to a step SP69, wherein the quantization step STEPG is obtained as follows:$\text{STEPG = 2 x RATIO x MEAN}$

In the formula (29), the pixel mean value data MEAN represents a level (corresponding to a so-called direct-current-like data quantity) of the significant picture information quantity of the transmission unit block in which the quantization is going to be executed. On the other hand, the buffer remaining quantity ratio RATIO represents a degree of allowance when supplying the transmission picture data S20 to the present transmission buffer memory 3. The numerical value [2] represents a proportional coefficient.

The quantization step STEPG obtained by the formula (29) becomes a value with which a data processing capability (or a degree of allowance for data processing) in the transmission buffer memory 3 is weighted to the significant picture information quantity to be transmitted in the transmission unit block where the transmission is now going to be effected.

The quantization step STEPG is variably controlled to a larger (or smaller) value, this step STEPG serving to quantize the picture part in which the pixel mean value data MEAN is large (or small) due to a large (or small) quantity of picture information of the transmission block. As a result, the quantization circuit 16 executes rough (or fine) quantization. During such a control process, if the data remaining quantity of the transmission buffer memory 3 goes on incrementing (or decrementing), the buffer remaining quantity ratio RATIO increases (or decreases) correspondingly. Then, the quantization step STEPG is variably controlled to a larger (or smaller) value, whereby the quantization circuit 16 executes the rough (or fine) quantization.

In this state, at a step SP70 the data control circuit 31 judges, when a second estimation reference value EST2 is set as expressed in the following formula, whether or not the quantization step STEPG obtained in the formula (29) is smaller than the second estimation reference value EST2 = 4.$\text{EST2 = 4}$

The second estimation reference value EST2 is herein set to such a lower limit value that the value of the step STEPG is not allowed to decrease limitlessly. If the answer is affirmative at the step SP70, the data control circuit 31 shifts to a step SP71, wherein the quantization step STEPG is, as shown in the formula (31), set to the lower limit value so as not to decrease thereunder.$\text{STEPG = 4}$ There is consequently developed such a state that the data generated quantity does not go excessive. In the wake of this, the quantization step calculating procedures are terminated through the steps SP66 and SP67.

Whereas if negative at the step SP70, the data control circuit 31 judges, when a third estimation reference value EST3 is set as expressed in the following formula, whether or not the quantization step STEPG is greater than the third estimation reference value $\text{EST3 = 128}$.$\text{EST3 = 128}$

The third estimation reference value EST3 is herein set to such an upper limit value that the value of the step STEPG is not allowed to limitlessly increase. If the answer is affirmative at the step SP72, the date control circuit 31 sets the quantization step STEPG to the upper limit value [128] at a step SP73, thus effecting the control so as not to abnormally reduce the data generated quantity in the quantization circuit 16. Thereafter, the quantization step calculating procedures are terminated through the steps SP66 and SP67.

Whereas if negative at the step SP72, this implies that there is no abnormality both in the buffer remaining quantity of the transmission buffer memory 3 and in the significant picture information quantity of the transmission unit block in which the quantization is now going to be performed. At this moment, the data control circuit 31 finishes the quantization step calculating procedures through the steps SP66 and SP67 in a state where the quantization step STEPG remains to be set at the step SP69.

Based on the arrangement discussed above, in a normal operating state the data control circuit 31 sets the quantization step STEPG to a larger value, when the significant picture information quantity of the transmission unit block in which process is now going to be carried out is larger. The data generated quantity is thereby restrained to a smaller value. When there comes a video signal having a large significant picture information quantity enough to make a man unable to perceive a deterioration of the picture quality in conformity with the Weber's law and the masking effect in terms of human visual sense, the data generated quantity in the video signal is restrained to thereby enhance a transmission efficiency of the data, correspondingly.

Simultaneously, in the case of quantizing a video signal part having a small significant picture information quantity enough to clearly perceive the deterioration of the picture quality in terms of human visual sense in conformity with the Weber's law and the masking effect, the data generated quantity can be incremented by effecting the control to reduce the quantization step STEPG. It is therefore feasible to generate the picture data exhibiting a good picture quality.

The transmission data which presents a much higher picture quality in terms of human visual sense on the whole can thus be generated with a high efficiency.

### Other Modification of Second Embodiment

(2-1) The second embodiment discussed above has dealt with a case where there is used the inter pixel differential data adjacent to the intra-frame-coded data. Instead, however, the same effects as those in the previous case can be obtained even by making use of a variety of other coding methods of, for instance, coding a differential signal (AC component) from a mean value (DC component) in the form of transmission data.
(2-2) In the second embodiment described above, an arrangement has been given, wherein the absolute value sum ACC of each pixel data is used when seeking the pixel mean value data MEAN per transmission unit block. Instead, however, the same effects as those in the preceding case can be acquired by use of power or a maximum value or a dynamic range.
(2-3) Where the transform coding circuit 15 involves the use of a discrete cosine transform circuit, an information quantity to be coded (i.e., the pixel mean value data MEAN) may be determined by a discrete transform coefficient.
(2-4) In the second embodiment discussed above, there has been stated a case where the least value of the quantization step STEPG is set to a numerical value [4]. This value may, however, be determined depending on a degree to which a dynamic range produced when effecting transform-coding in the transform coding circuit 15 is expanded. For example, where the discrete cosine transform circuit is employed as the transform coding circuit 15, the dynamic range is expended by a factor of 8 with respect to the input signal. Hence, the least value of the quantization step may be set to 4 through 8.

The maximum value can, as a matter of fact, be set to approximately 46 through 128 from a point of view of a capacity of the transmission buffer memory 3 or a control velocity.

As discussed above, the second embodiment of this invention end modifications thereof provides the following advantages. The quantization step is, when the picture information quantity increases, controlled to a larger value on the basis of the picture information quantity to be coded. With this arrangement, it is possible to easily generate the transmission data having the following characteristics. The data part in which the deterioration of the picture quality is perceivable by the human visual sense can be transmitted with a high picture quality, whereas the picture part in which the deterioration of the picture quality is not perceivable can be transmitted with a low picture quality.

### Third Embodiment

In FIG. 6, the components corresponding to those of FIG. 4 are marked with the like symbols. Referring to FIG. 6, a quantization step of a quantization circuit 16 is controlled by a quantization step control signal S31 given from a data control circuit 31.

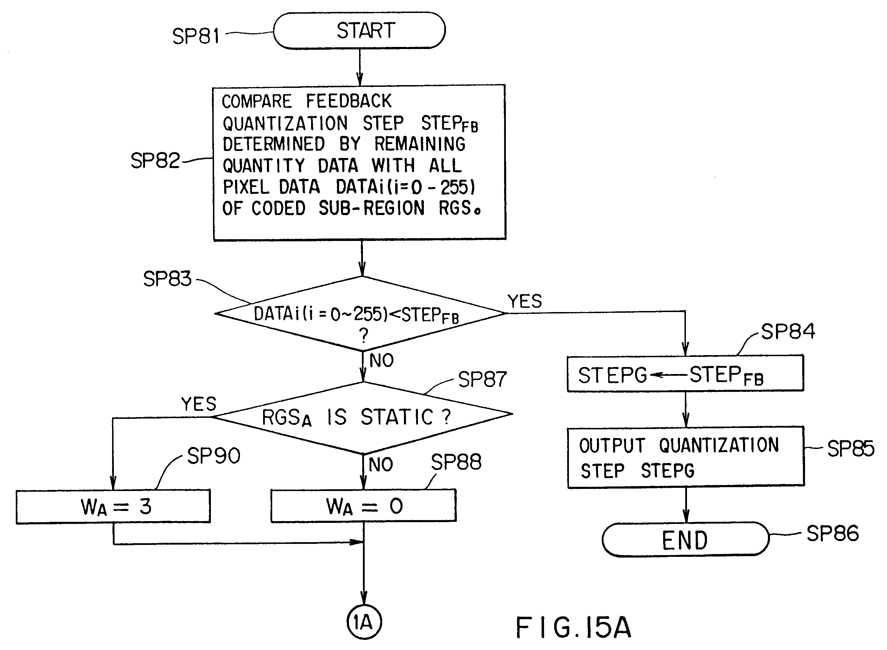

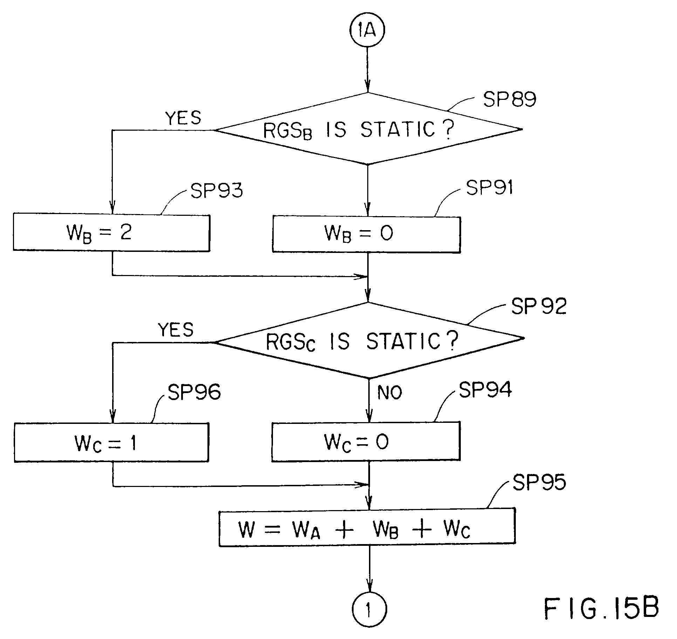

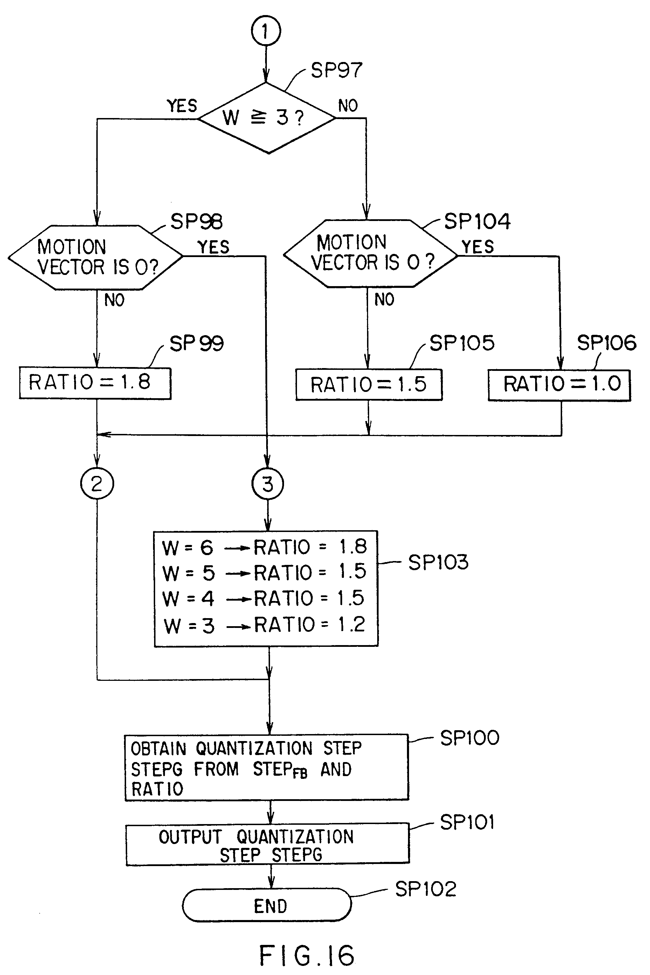

The data control circuit 31 calculates the quantization step STEPG in quantization step calculating procedures shown in FIGS. 15 and 16 on the basis of transmission data information S33 imparted from a motion detecting circuit 21 and a remaining quantity data signal S25 of a transmission buffer memory 3. The circuit 31 then transmits this signal as a quantization step control signal S31.

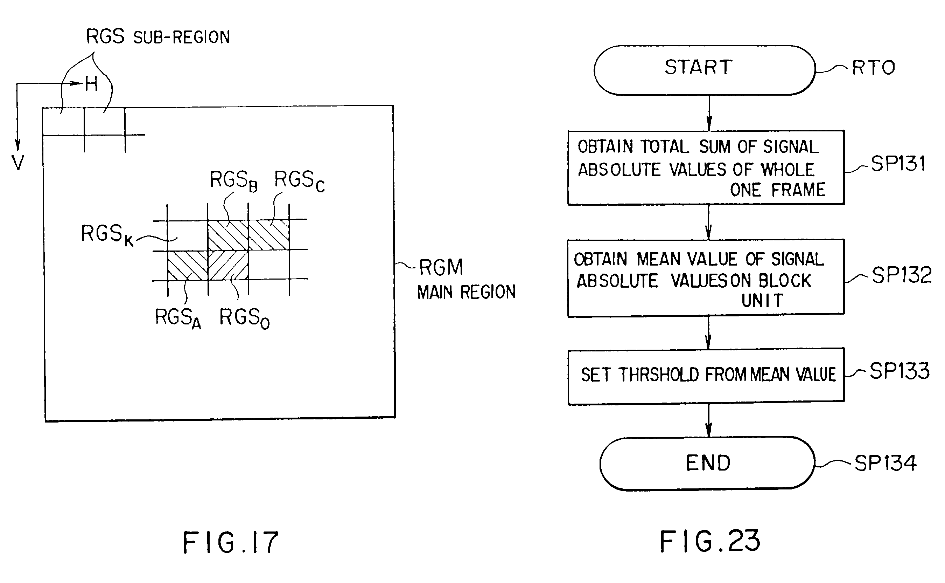

In the quantization step calculating procedures shown in FIGS. 15 and 16, as illustrated in FIG. 17, the date control circuit 31 divides a main region RGM serving as, e.g., a 1-frame picture into sub-regions RGS consisting of a 16 pixels x 16 pixels transmission unit block. The circuit 31 then quantizes, to transmission data, respective pixel data DATA constituting significant picture information, which is to be coded, of the sub-regions RGS.

To be more specific, the data control circuit 31 makes, when entering the quantization step calculating procedures at a step SP81, a comparison between a feedback quantization step STEP_{FB} and all of pixel data DATAi (i = 0 - 255) of the coded sub-region RGS₀ at a step SP82, the feedback quantization step being determined by remaining quantity data of the transmission buffer memory 3 which can be known from a remaining quantity data signal S25 associated with the transmission buffer memory 3. Subsequently, data control circuit 31 judges whether or not each of the pixel data DATAi (i = 0 - 255) is smaller than the feedback quantization step STEP_{FB} at a step SP83.

If the answer is affirmative, this implies that no motion is made; i.e., significant picture information (e.g., differential data between a preframe and a present frame) of a main region RGM constituting the present frame, viz., a frame to be quantized at present is virtually a level of a numerical value [0].

At this moment, the data control circuit 31 moves to a step SP84, wherein the feedback quantization step STEP_{FB} is replaced with a quantization step STEPG. Thereafter, at a step SP85 the data control circuit 31 transmits the quantization step STEPG to a quantization circuit 16.

The data control circuit 31 then finishes the quantization step calculating procedures at a step SP86.

In a status where the data control circuit 31 executes the foregoing processes, as a matter of fact, a transform coding signal S15 supplied to the quantization circuit 16 from a transform coding circuit 15 assumes the level of numerical value [0] of a noise level. As a result, the quantization circuit 16 transmits data of numerical value [0] as quantization data S16, and eventually the circuit 16 is controlled to develop a state where the data to be transmitted is not generated.

Whereas if negative at a step SP83, this indicates that there is the significant picture information to be transmitted to any one of the sub-regions. At this time, the data control circuit 31 shifts to a step SP87. The circuit 31 launches on a process to calculate the quantization step STEPG used for quantization thereof.

A value of the quantization step STEPG for the coded sub-regions RGS is determined depending on a relationship with the significant picture information of the adjacent sub-regions adjacent to the coded sub-region RGS₀.

More specifically, at a step SP87 the data control circuit 31 judges whether the significant picture information is static or not (namely, whether or not there is a variation in comparison with the picture information of the adjacent sub-region RGS_{A} in the proframe) with respect to an adjacent sub-region RGS_{A} (FIG. 17) so disposed one before in an H-direction (i.e., a horizontal scanning direction) as to be adjacent to the coded sub-region RGS₀.

If the answer is negative at this time, this implies that some motion can be seen in the adjacent sub-region RGS_{A}. The data control circuit 31 the moves to a step SP88, wherein static ratio data W_{A} is set to a value [0]. After this, the circuit 31 shifts to a step SP89.

Whereas if affirmative at the step SP87, the data control circuit 31 sets the static ratio data W_{A} to a value [3] at a step SP90 and then moves to a step SP89.

At the step SP89, the data control circuit 31 judges whether the significant picture information is static or not with respect to an adjacent sub-region RGS_{B} (FIG. 17) so disposed one before in a V-direction (i.e., a vertical scanning direction) as to be adjacent to the coded sub-region RGS₀ by making a comparison with the preframe. If the answer is negative, at a step SP91 the data control circuit 31 sets the static ratio data W_{B} of the adjacent sub-region RGS_{B} to a value [0] and then moves to a step SP92. Whereas if affirmative at the step SP89, the data control circuit 31 sets the static ratio data W_{B} to a value [2] at a stop SP93 and subsequently shifts to the step SP92.

At the step SP92 the data control circuit 31 judges whether or not a change can be seen in the significant picture information with respect to an adjacent sub-region RGS_{C} (adjacent to the coded sub-region RGS₀ and disposed in an obliquely upper rightward direction) so disposed one behind in the H-dreiciton (i.e., the horizontal scanning direction) as to be adjacent to the adjacent sub-region RGS_{B}. If the answer is negative, the circuit 31 sets the static ratio data W_{C} to a value [0] at a step SP94 and moves to the next step SP95. Whereas if affirmative at the step SP92, the circuit 31 sets the static ratio data W_{C} to a value [1] at a step SP96 and then moves to the step SP95.

Thus, throughout the steps SP87 to SP95 the data control circuit 31 detects variations in the significant picture information with respect to the adjacent sub-regions RGS_{A}, RGS_{B} and RGS_{C} which are all contiguous to the coded sub-region RGS₀. If no variation can be seen, the value [0] is weighted to the static ratio data W_{A}, W_{B} and W_{C}. Whereas if the variations are present, the numerical values [3], [2] and [1] are weighted to the static ratio data W_{A}, W_{B} and W_{C} as shown in the following formulae.$\begin{matrix}\begin{matrix}\begin{matrix}{\text{W}}_{\text{A}} \text{= 3}\end{matrix} \\ \begin{matrix}{\text{W}}_{\text{B}} \text{= 2}\end{matrix} \\ \begin{matrix}{\text{W}}_{\text{C}} \text{= 1}\end{matrix}\end{matrix}\end{matrix}$

The weighting processes at the steps SP90, SP93 and SP96 represent degrees to which a static state where the adjacent sub-regions RGS_{A}, RGS_{B} and RGS_{C} are static exerts influences on the significant picture information of the coded sub-region RGS₀.

More specifically, weighting the value [3] to the static ratio data W_{A} of the adjacent sub-region RGS_{A} at the step SP90 implies that a relative variation in the picture information of the coded sub-region RGS₀ in the H-direction is obtained from the significant picture information of the single adjacent sub-region RGS_{A}.

In contrast with this, there will be elucidated reasons for weighting the numerical values [2] and [1] to the V-directional adjacent sub-regions RGS_{B} and RGS_{C} at the steps SP93 and SP96. Firstly, the significant picture information exerting an influence on the significant picture information of the coded sub-region RGS₀ in the V-direction is conceived as pieces of information of the adjacent sub-regions RGS_{B} and RGS_{C}. The influences given entirely from these two adjacent sub-regions RGS_{B} and RGS_{C} are, it may be considered, substantially equal to those given from the adjacent sub-region RGS_{A} in the horizontal direction. Hence, a value of sum (i.e., [2] + [1] = [3]) of the static ratio data W_{B} and W_{C} one selectively set equal to the value (viz., a value [3]) of the static ratio data W_{A}.

Secondly, a dislance between the coded sub-region RGS₀ and the adjacent sub-regions RGS_{B} is shorter than that between the coded sub-region RGS₀ and the adjacent sub-region RGS_{C}. A magnitude of influence received is, it may be considered, larger in the adjacent sub-region RGS_{B} than in the sub-region RGS_{C}. Therefore, the values [2] and [1] are weighted to the V-directional adjacent sub-regions RGS_{B} and RGS_{C}.

After finishing the above-described processes, at the step SP95 the data control circuit 31 obtains the static ratio data W indicating a total degree of influences given from the three adjacent sub-regions RGS_{A}, RGS_{B} and RGS_{C} with respect to the coded sub-region RGS₀ by adding the static ratio data W_{A}, W_{B} and W_{C} of the adjacent sub-regions RGS_{A}, RGS_{B} and RGS_{C}. A relationship therebetween is expressed such as:${\text{W = W}}_{\text{A}} {\text{+ W}}_{\text{B}} {\text{+ w}}_{\text{C}}$

Subsequently, the data control circuit 31 enters a process to calculate feedback quantization step transform data RATIO on the basis of the static ratio data W.

That is, the data control circuit 31 judges whether the static ratio data W is greater than [3] or not at a step SP97. If the answer is affirmative, the circuit 31 then judges, after moving to a step SP98, whether a motion vector of the coded sub-region RGS₀ is [0] or not.

If the answer is NO, this indicates that no or a small amount of variations appear in the adjacent sub-regions RGS_{A}, RGS_{B} and RGS_{C}, while the picture makes a motion in the coded sub-region RGS₀. Hence, a change of the picture is caused in a position of the coded sub-region RGS₀.

At this moment, the data control circuit 31 sets the feedback quantization step transform ratio data RATIO to its greatest value [1.8] at a step SP99. Thereafter, at a step SP100 the circuit 31 calculates a value of the quantization step STEPG by, as expressed in the following formula, dividing the feedback quantization step STEP_{FB} by the feedback quantization step transform ratio data RATIO.$\text{STEPG =} \frac{{\text{STEP}}_{\text{FB}}}{\text{RATIO}}$

The data control circuit 31 outputs the thus calculated quantization step STEPG as a quantization control signal S31 to the quantization circuit 16 at a step SP101. Then, the quantization step calculating procedures come to an end at a step SP102.

In consequence of this, the quantization circuit 16 quantizes a picture boundary existing in the coded sub-region RGS₀ by use of the quantization step STEPG of the least value. Thus, the picture information of that boundary undergoes much finer quantization. Hence, the picture of the boundary which is conspicuous to eyes can be quantized to the transmission data exhibiting a still higher picture quality.

Whereas if the answer is YES at the step SP98, this means that variations in the significant picture information of the adjacent sub-regions RGS_{A}, RGS_{B} and RGS_{C} assume a state of [0] or are small, while there is produced a picture in which no motion is made in the coded sub-regions RGS₀ also. At this lime, the data control circuit 31 sets the feedback quantization step transform ratio data RATIO having a value corresponding to the way of variations in the significant picture information of the adjacent sub-regions RGS_{A}, RGS_{B} and RGS_{C} at a step SP103. In the wake of this step, the data control circuit 31 executes the arithmetic operation of the quantization step STEPG as done at the step SP100.

In accordance with this embodiment, when the static ratio data W is a value [6] (this implies that there is no variation in the picture information of all the adjacent sub-regions RGS_{A}, RGS_{B} and RGS_{C}), the data control circuit 31 sets the feedback quantization step transform ratio data RATIO to the greatest value [1.8] at the step SP103. Since the quantization step STEPG has been set to the least value, the quantization circuit 16 executes the fine quantization of the coded sub-region RGS₀ by using the least quantization step STEPG, when obtaining such a picture state that no picture variation is present in the adjacent sub-regions RGS_{A}, RGS_{B} and RGS_{C}, and no picture motion is made in the coded sub-region RGS₀.

When the static ratio data W is [5] or [4] (this indicates that no picture variation can be seen in the adjacent sub-region RGS_{A} and any one of the sub-regions RGS_{B} and RGS_{C}), the data control circuit 31 sets the feedback quantization step transform ratio data RATIO to a slightly smaller value [1.5]. The quantization circuit 16 executes slightly rough quantization of such a picture that the picture variation appears in a part of the picture contiguous to the coded sub-region RGS₀.

The data control circuit 31 further sets, when the static ratio data W is [3] (this implies that only the adjacent sub-region RGS_{A} is static, or alternatively only the sub-regions RGS_{B} and RGS_{C} are static), the feedback quantization step transform ratio data RATIO to an even smaller value [1.2]. The data control circuit 31 executes rougher quantization of the coded sub-region RGS₀ by further incrementing a value of the quantization step STEPG.

If the answer is negative at the step SP97, the data control circuit 31 judges whether the motion vector is [0] or not at a step SP24.

If the answer is NO, at this time the static ratio data W is a value [3]. This indicates that the picture variation can be seen in the most influential adjacent sub-region RGS_{A} (any one of the adjacent sub-regions RGS_{B} and RGS_{C} is static), while there is detected such a picture as to exhibit no picture motion in the coded sub-region RGS₀. The data control circuit 31 at the moment sets the feedback quantization step transform ratio data RATIO to an intermediate value [1.5] at a step SP105. After this step, the circuit 31 executes the arithmetic operation to obtain the quantization step STEPG as done at the step SP100.

The picture variation is present in the adjacent sub-region RGS_{A} contiguous to the static coded sub-region RGS₀ in the H-direction, and therefore there exists a boundary of the picture information in the coded sub-region RGS₀. For this reason, the data control circuit 31 executes slightly rough quantization of the coded sub-region RGS₀, thereby generating the transmission data, a quantity of which is compressed enough not to deteriorate the picture quality.

If the answer is YES at the step SP104, this indicates that the pictures of the adjacent sub-regions RGS_{A}, RGS_{B} and RGS_{C} change, and simultaneously the picture of the coded sub-region RGS₀ also moves. At this time, the data control circuit 31 sets the feedback quantization step transform ratio data RATIO to such a value [1.0] that no transformation is performed with respect to the feedback quantization step at a step SP106. The circuit then computes the quantization step STEPG at the step SP100.

Thus the data control circuit 31 causes the quantization circuit 16 to effect the rough quantization by using the feedback quantization step STEP_{FB} as it is without scale-down-transforming this feedback quantization step, when a picture, which moves together with the adjacent sub-regions RGS_{A}, RGS_{B} and RGS_{C}, is present in the coded sub-region RGS₀. As a result, the circuit 31 caries out the control to restrain the data generated quantity associated with the motion picture of a low spectral luminous efficacy.

According to the arrangement of FIGS. 15 and 16, when quantizing the significant picture information of the coded sub-region RGS₀, there is made a judgement as to the way of variations of the pictures in the adjacent sub-regions RGS_{A}, RGS_{B} and RGS_{C}. Simultaneously, a value of the quantization step STEPG is selected in accordance with the relative variations or motions between the coded sub-region and the adjacent sub-regions by judging whether or not the motion can be seen in the coded sub-region RGS₀. This enables the control over the quantization step to adjust itself to the content of picture information of each part in the main region RGM. It is therefore possible to generate the transmission data having much higher picture quality than in the prior arts.

### First Modification of Third Embodiment

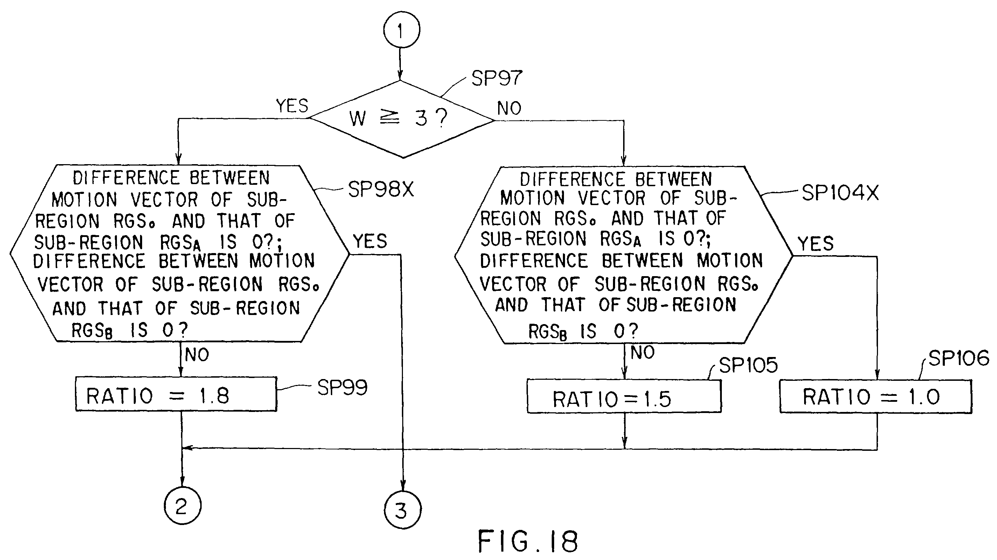

Turning to FIG. 18, there is shown a first modification of the third embodiment. The components corresponding to those of FIGS. 15 and 16 are marked with the like symbols. The data control circuit 31 carries out quantization step calculating procedures in which the steps SP98 and SP108 of FIG. 16 are replaced with steps SP98X and SP104X.

In FIGS. 15 and 16, the data control circuit 31 makes a decision on whether or not the motion appears in the coded sub-region RGS₀ from a judgement as to whether the motion vector is [0] or not in connection with the coded sub-region RGS₀ alone. In accordance with the embodiment of FIG. 18, however, instead of that the data control circuit 31 judges whether or not a difference between the motion vector of the coded sub-region RGS₀ and that of the adjacent sub-region RGS_{A} is [0] and whether or not a difference between the motion v eel or of the coded sub-region RGS₀ and the adjacent sub-region RGS_{B} is [0]).

According to the arrangement of FIG. 18, the quantization step STEPG used for the quantization is controlled depending on whether or not the way of motion of the significant picture information of the coded sub-region RGS₀ coincides with that of the adjacent sub-regions RGS_{A} and RGS_{B}. If there is a region exhibiting a different motion in the motion picture, the relevant boundary can be quantized by the fine quantization step. This in turn enables generation of the transmission data having a picture quality more adaptive to the content of significant picture information.

### Other Modifications of Third Embodiment

(3-1) In the third embodiment and the modification thereof discussed above, there has been stated a case where throughout the steps SP90, SP93 and SP96 (FIG. 15), the static ratio data W_{A}, W_{B} and W_{C} each having a different weight are allocated to the adjacent sub-regions RGS_{A}, RGS_{B} and RGS_{C}. Instead, however, the same effects can be acquired even by allocating the same weight thereto.
(3-2) The third embodiment and the modifications thereof given above has dealt with an arrangement of detecting,as shown in FIG. 17, no correlation of the adjacent sub-region RGS_{K} contiguous to the adjacent sub-regions RGS_{A} and RGS_{B} with respect to the coded sub-ub-region RGS₀. Instead, however, the static ratio data W may be obtained with respect to the adjacent sub-regions, including a variation in the sub-region RGS_{K}.

As explained earlier, the third embodiment of this invention and modifications thereof provide the following advantages. The quantization step is determined on the basis of the picture motion in the coded sub-region and the variations in the adjacent sub-regions. The boundaries between the static regions and the dynamic regions can, if necessary, be finely quantized. The transmission data having a further enhanced picture quality can thereby be generated.

### Fourth Embodiment

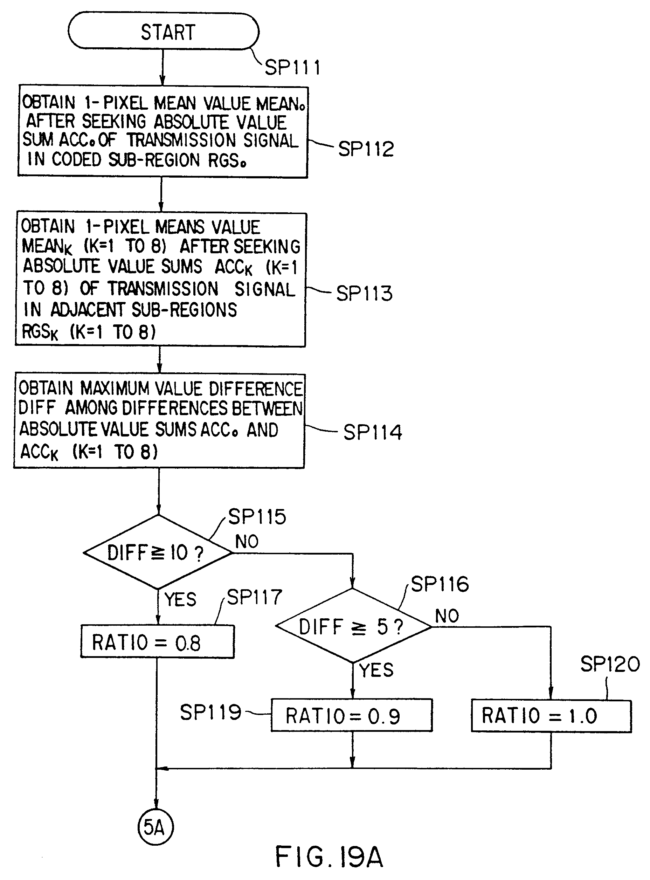

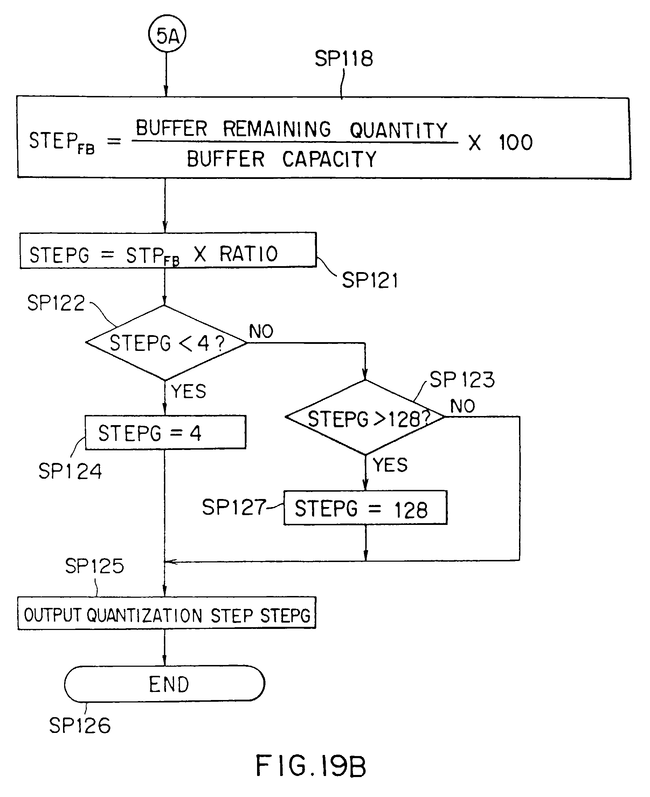

In FIG. 6, the components corresponding to those of FIG. 4 are marked with the like symbols. Referring to FIG. 6, a picture data generating system 1 includes a data control circuit 31. The data control circuit 31 detects a nature of picture data to be transmitted on the basis of transmission data information S33 given from a motion detecting circuit 21. Based on the detected information, the data control circuit 31 calculates a quantization step which varies corresponding to a nature of significant picture information to be transmitted by executing quantization step calculating procedures shown in FIG. 19. The data control circuit 31 supplies a quantization step control signal S31 to a quantization circuit 16.

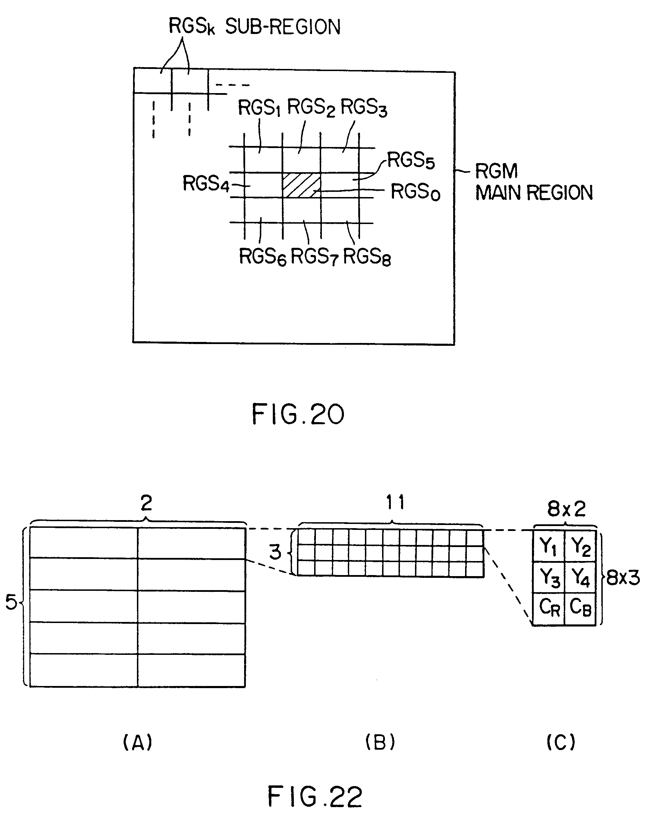

In this fourth embodiment, the data control circuit 31, as illustrated in FIG. 20, allocates a main region RGM to 1-frame picture data with respect to present frame data S12 generated from a present frame memory 12. Simultaneously, the data control circuit 31 allocates a sub-region RGS_{K}, for example, per transmission unit block data. Consequently, the data control circuit 31 estimates a nature of each picture part by detecting variations in picture information quantity of the sub-region RGS_{K} with respect to the 1-frame picture constituting the main region RGM.

Namely, where the sub-region in an arbitrary position within the main region RGM is specified as a coded picture region, and when quantizing the transmission unit block data thereof, a quantization step STEPG used for quantizing a coded sub-region RGS₀ in accordance with a magnitude of a differential data quantity is determined. The determination of the quantization step STEPG involves the steps of: extracting differential data of the maximum value from differences in significant picture information quantity between 8 adjacent sub-regions RGS_{K} (K = 1 through 8) surrounding the coded sub-region RGS₀ and the coded sub-region RGS₀: and judging the differential data as variations in nature of the pictures between the coded sub-region RGS₀ and the adjacent sub-regions RGS_{K} (K = 1 through 8).

The data control circuit 31 obtains, when entering quantization step calculating procedures at a step SP111 (FIG. 19), an absolute value sum ACC₀ of the transmission signal with respect to the coded sub-region RGS₀ at a step SP112 as expressed in the following formula.${\text{ACC}}_{\text{0}} {\text{= Σ}}_{\text{RGS0}} \text{|DATA|}$ The absolute value sum ACC₀ can be obtained by integrating 256 pieces (16 x 16 = 256) of pixel data combined to form the coded sub-region RGS₀. After this, pixel mean value data MEAN per pixel is given by:${\text{MEAN}}_{\text{0}} \text{=} \frac{{\text{ACC}}_{\text{0}}}{\text{16 x 16}}$

Subsequently, at a step SP113 the data control circuit 31 likewise obtains absolute value sums ACC_{K} (K = 1 through 8) with respect to the 8 adjacent sub-regions RGS_{K} (K = 1 through 8). ACC_{K} is expressed such as:${\text{ACC}}_{\text{K}} {\text{= Σ}}_{\text{RGSK}} \text{|DATA| (K = 1 through 8)}$ Thereafter, a 1-pixel mean value MEAN_{K} (K = 1 through 8) is given by the following formula.${\text{MEAN}}_{\text{K}} \text{=} \frac{{\text{ACC}}_{\text{K}}}{\text{16 x 16}}$

In the wake of this step, the data control circuit 31, as expressed in the following formula, obtains a maximum value difference DIFF of the maximum value among difference between the absolute value sum ACC₀ of the coded sub-region RGS₀ and the absolute values of the 8 adjacent sub-regions RGS_{K} (K = 1 through 8) on the basis of the arithmetic result at a step SP114.$\text{DIFF = MAX { |ACC0 - ACCK| } (K = 1 through 8)}$

Among the variations both in the significant picture information quantity (i.e., the absolute value sum ACC₀) of the coded sub-region RGS₀ and in the significant picture information quantities of the adjacent sub-regions RGS_{K} (K = 1 through 8) surrounding the coded sub-region, the data control circuit 31 recognizes the steepest variation as a characteristic of the picture of the significant picture information of the coded sub-region RGS₀ at the steps SP112 to SP114. Based on a magnitude of the maximum value difference DIFF, the data control circuit 31 subsequently executes an arithmetic operation of the quantization step STEPG.

At a steps SP115 and SP116, the data control circuit 31 sequentially judges whether or not the difference DIFF is greater than or equal to first and second picture information estimation reference values EST1 and EST2 which are set in the following formulae.$\begin{matrix}\begin{matrix}\begin{matrix}\text{EST1 = 10}\end{matrix} \\ \begin{matrix}\text{EST2 = 5}\end{matrix}\end{matrix}\end{matrix}$

The first and second picture information estimation reference values EST1 and EST2 are selectively set to such values as to classify intensities of variations in the picture information. Firstly, when the answer is affirmative at the step SP115 (viz., DIFF ≧ 10 ), it is judged that the variations in the coded sub-region RGS₀ are the steepest ones. Secondly, if the answer is negative at the step SP115, and if the answer is affirmative at the step SP116 (i.e., 10 > DIFF ≧ 5), it is judged that the variations in the picture information of the coded sub-region RGS₀ are moderate. Thirdly, if the answer is negative both at SP115 and at SP116 (i.e., DIFF < 5), it is judged that the variations in the picture information of the coded sub-region RGS₀ are small.

Thus, the data control circuit 31 judges that the picture information drastically changes in the coded sub-region RGS₀ because of obtaining the affirmative answer at the step SP115. Moving to a step SP117, the data control circuit 31 sets, as expressed in the formula which follows, picture variation estimating coefficient data RATIO to a numerical value [0.8].$\text{RATIO = 0.8}$ The circuit 31 then shifts to a step SP118.

Since the answer is YES at the step SP116, the data control circuit 31 comes to a conclusion that the variations in the picture information of the coded sub-region RGS₀ are moderate. Moving to a step SP119, the picture variation estimating coefficient data RATIO is, as expressed in the following formula, set to a numerical value [0.9].$\text{RATIO = 0.9}$ Then, the circuit 31 shifts to the above-described step SP118.

Because of the answer being negative at the step SP116, the data control circuit 31 judges that the variations in the picture information of the coded sub-region RGS₀ are small. The circuit 31 shifts to a step SP120, wherein the picture variation estimating coefficient data RATIO is, as shown in the formula (47), set to [1.0].$\text{RATIO = 1.0}$ Then, the circuit 31 moves to a step SP118.

Thus, the data control circuit 31 is able to set the picture variation estimating coefficient data RATIO representing an amount of variations in the information of the coded sub-region RGS₀.

Subsequent to this step, the data control circuit 31 obtains buffer remaining quantity index data STEP_{FB} at the step SP118. The data STEP_{FB} is given by:${\text{STEP}}_{\text{FB}} \text{=} \frac{\text{Buffer Remaining Quantity}}{\text{Buffer Capacity}} \text{×100}$ Thereafter, at a step SP121 the quantization step STEPG is arithmetically obtained as follows:${\text{STEPG = STEP}}_{\text{FB}} \text{x RATIO}$

As the buffer remaining quantity employed for computing the buffer remaining quantity index data at the step SP118, the data control circuit 31 uses a buffer remaining quantity data signal S25 fed back from the transmission buffer memory 3. The quantization step STEPG is obtained by compressively converting a value of the signal S25 by using the picture variation estimating coefficient data RATIO in accordance with the formulae (45) through (47).

After calculating the quantization step STEPG in this manner, the data control circuit 31, as shown in the following formula (50), sets a lower limit estimation reference value EST11 to a value [4] at a step SP122.$\text{EST11 = 4}$ The data control circuit 31 judges whether the quantization step STEPG is smaller than the lower limit estimation reference value EST11 or not. If negative, an upper limit estimation reference value EST12 is, as given in the formula (51), set to a value [128] at a step SP123.$\text{EST12 = 128}$ The data control circuit 31 confirms whether the quantization step STEPG is larger than this upper limit estimation reference value EST1 or not.

When the pixel data to be quantized is reduced as small as noises, the lower limit estimation reference value EST11 is selectively set to a value enough to estimate this reduction. Whereas if affirmative at the step SP122, the data control circuit 31 judges that the calculated quantization step STEPG has become excessively small. Shifting to a step SP124, the data control circuit 31 fixes the quantization step STEPG to the lower limit estimation reference value of 4. After this step, the circuit 31 outputs the quantization step STEPG as a quantization step control signal S31 to the quantization circuit 16. The quantization step calculating procedures are finished at a step SP126.

The upper limit estimation reference value EST12 is, when a value of the quantization step STEPG becomes excessive, set to a value enough to estimate this excessiveness. If the answer is YES at the step SP123, the value of the quantization step STEPG is fixed to the upper limit estimation reference value EST12 = 128. Then, the quantization step calculating procedures are terminated through the step SP123 and SP124.

Whereas if negative at the step SP123, this implies that no abnormality can be seen in the quantization step STEPG calculated at the step SP121. At this moment, at a step SP125 the data control circuit 31 outputs, to the quantization circuit 16, the quantization step STEPG calculated at the step SP121 as it is. The quantization step calculating procedures thereafter come to an end at a step SP126.

According to the arrangement of FIG. 19, the data control circuit 31 obtains, when coding the coded sub-region RGS₀, the maximum value differential data DIFF representing differences between the coded sub-region RGS₀ and the adjacent sub-regions RGS_{K} (K = 1 through 8) at the steps SP112 to SP114. Based on the maximum value differential data DIFF, a value of the picture variation estimating coefficient data RATIO is selectively set in accordance with a magnitude of the maximum value differential data DIFF at the steps SP115 to SP120.

In accordance with this embodiment, the following three estimation ranges are established. First estimation range is:$\text{DIFF ≧ 10}$ Second estimation range is:$\text{10 > DIFF ≧ 5}$ Third estimation range is:$\text{5 > DIFF}$ When a value of the maximum value differential data DIFF falls within the first, second and third estimation ranges respectively, the data control circuit 31 allocates values [0.8], [0.9] and [1.0] as the picture variation estimating coefficient data RATIO, there by estimating the variations in the significant picture information.

The data control circuit 31 determines the quantization step STEPG by making a combination to weight the buffer remaining index data STEP_{FB} representing a buffer remaining quantity of the transmission buffer memory 3 while employing results of the above-mentioned estimation at the steps SP118 and SP121.

In consequence, the picture variation estimation coefficient RATIO diminishes when the significant picture information quantity increases due to an increment of value of the maximum value differential data DIFF, the data control circuit 31 performs the control to reduce the quantization step STEPG, correspondingly.

In the case of causing step variations in the significant picture information quantity of the picture parts in the coded sub-region RGS₀, the transmission data exhibiting a much higher picture quality can be generated by controlling the quantization step STEPG of the coded sub-region RGS₀ down to a smaller value.

Therefore, according to the arrangement shown in FIG. 19, the circuit 31 effects the control to reduce the value of the quantization step STEPG with respect to the picture part in which the significant picture information drastically changes (in many cases, these parts may be boundaries between relatively simple picture regions and relatively complicated picture regions). Hence, the picture parts exhibiting the drastic changes can be quantized to clear picture data. This leads to a further enhancement of the picture quality of the transmission data as a whole.

Consequently, the picture parts showing the drastic changes are quantized by the finer quantization steps. As a matter of fact, the quantization can be carried out to provide a picture in which the two picture parts are smoothly connected in terms of visual sense at the boundary therebetween. Besides, the noises such as mosquito noises can be prevented.

In the second embodiment, the data control circuit 31 restricts a range that the quantization step STEPG is allowed to take at the steps SP120 through SP125. This enables the prevention of an overflow or underflow in the transmission buffer memory 3.

### Modifications of Fourth Embodiment

(4-1) The fourth embodiment discussed above has dealt with a case where the buffer remaining quantity index data STEP_{FB} is compressed (multiplied) by use of the picture variation estimating coefficient data RATIO as data indicating the variations in the significant picture information. This invention is not, however, limited to this method. In connection with the arithmetic operation of the quantization step STEPG at the step SP121, the same effects as those in the previous case can be obtained by addition and subtraction using the data representing an amount of variations.
(4-2) In the fourth embodiment given above, there has been described an arrangement that the maximum value of differences between the coded sub-region and the adjacent sub-region are used as the data indicating the information quantity of the picture on the basis of the absolute value sum of the pixel data DATA. Instead of the absolute value sum, however, power of video signal may also be used. In place of the maximum value, a dynamic range may also be utilized.
   Where the transform coding circuit 15 involves the use of a discrete cosine transform circuit, a discrete cosine transform coefficient may be detected as a significant picture information quantity.
(4-3) In the fourth embodiment described above, when obtaining the buffer remaining quantity index data STEP_{FB} at the step SP118 of FIG. 19, as in the conventional arrangement of FIG. 4, the remaining quantity given from the transmission buffer memory 3 is used. Instead of this, however, the remaining quantity data may be generated inwardly of the data control circuit 31 on the basis of the transmission data information S33 of the motion detecting circuit 21.
(4-4) In the aforementioned fourth embodiment, among the differences in the absolute value sum, the difference of the maximum value is employed as the data representing the variations in the significant picture information between the adjacent sub-regions and the coded sub-region. The parameter is not, however, limited to this but may involve the use of, for instance, a ratio of the absolute value sum of the pixel signals in the coded sub-region RGS₀ to the maximum value differential data DIFF. To summarize, a parameter indicating a degree of variations in the significant picture information suffices.
   Moreover, values other than the maximum value of differential data | ACC₀ - ACC_{K} | are also used as the case may be.
(4-5) In accordance with the fourth embodiment discussed above, there have been employed the differences between the coded sub-region RGS₀ and all of the 8 adjacent sub-regions RGS_{K} (K = 1 through 8) which surround the coded sub-region (FIG. 17). However, there may also be used a difference between the coded sub-region and a part of the adjacent sub-regions, e.g., the adjacent sub-region RGS₄ disposed just before the coded sub-region.
(4-6) In the foregoing fourth embodiment, there has been stated a case where the sub-regions RGS_{K} are selectively set in the transmission unitnit block (a region of 16 pixels x 16 pixels). An area of the sub-regions RGS_{K} is not, however, limited to the transmission unit block. A variety of areas may also be selected as the necessity arises.

As discussed above, the fourth embodiment of this invention and modifications thereof provides the following advantages. the quantization step is controlled to change corresponding to an amount of variations in the picture information between the sub-region to be quantized and the adjacent sub-regions. It is therefore possible to generate such transmission data as to enhance the picture qualities of the picture parts in which the picture information quantity drastically changes. Thus, it is feasible to smoothly connect the picture parts in which the picture information drastically changes. Besides, the transmission data adaptive to effectively restain the occurrence of noises can be generated.

### (5) Fifth Embodiment

A fifth embodiment of this invention will hereinafter be described in detail with reference to the accompanying drawings.

### Whole Construction of Video Signal Recording System

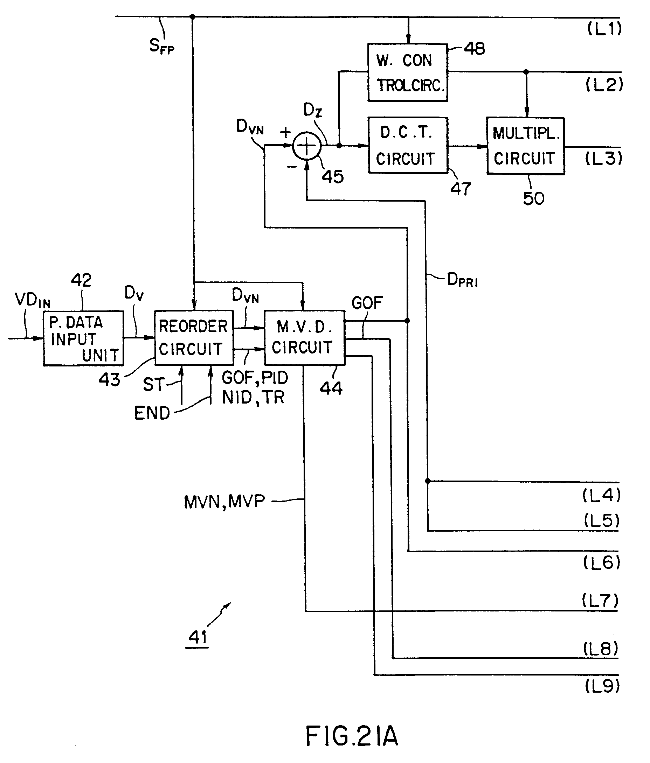

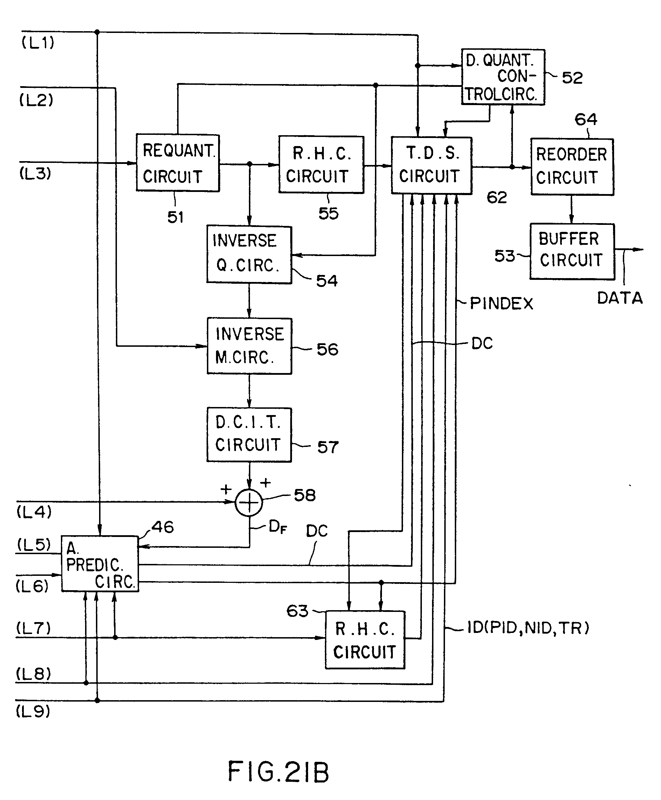

Referring to FIG. 21, there is illustrated a whole construction of a video signal recording system 41 to which the present invention is applied. An input video signal VD_{IN} is high-efficient-coded and transformed into a piece of transmission frame data DATA. Thereafter, the frame data DATA is recorded on, e.g., a compact disc.

In the video signal recording system 41, the input video signals VD_{IN} is given to a picture data input unit 42, wherein luminance signals and chrominance signals that are combined to form the input video signals VD_{IN} are transformed into digital data. Subsequently, a data quantity is compressed down to one-fourth.

More specifically, the picture data input unit 42 imparts the luminance signals which have been transformed into the digital data to a one-side field removing circuit (not illustrated). In this circuit, one field is removed, and thereafter the luminance signals for another remaining field are culled out in alternate lines.

The picture data input unit 42 removes two color difference signals for one field, which have been transformed into the digital signals. The unit 42 alternately output the chrominance signals per line. The luminance signals culled out and the chrominance signals selectively outputted are transformed into data of a predetermined transmission rate via a time-base transform circuit.

The input video signals VD_{IN} undergo preprocessing through the picture data input unit 42, thereby sequentially generating picture data D_{V} having a series of frame data.

When start pulse signals ST are inputted, a recorder circuit 43 reorders the picture data D_{V} as follows. The picture data D_{V} having pieces of frame data that are to be inputted in the order of A0, C1, C2, B3, C4, C5, A6, C7, ... are, after being divided into frame groups on a 6-frame unit, reordered in a coding sequence such as A0, A6, B3, C1, C2, C4, C5, A12, B9, C7, ... . The thus reordered data are then outputted.

Note that the frames to be intra-frame-coded are symbolized by [A] with numerals, while the frames to be inter-frame-coded at a level 1 or 2 are symbolized by [B] or [C] with numerals.

The frame data are thus reordered in the coding sequence, whereby the sequent intra and inter frame coding processes can correspondingly be simplified.

The reorder circuit 43 executes, at the first transmission of an end pulse signal END, reorders the frame data inputted just before it. The reorder circuit 43 then stops outputting the frame data. Simultaneously, the circuit 43 outputs a frame group index GOF in which a signal level rises at the top of each frame group, a pre-predictor reference index PID, a post-predictor reference index NID and a temporary index TR indicating the order of the frame data in the frame groups.

A motion vector detecting circuit 44 receives the recorded picture data D_{VN} and processes the individual frame data by dividing the frame data into predetermined macro-unit blocks.

At this lime, the motion vector detecting circuit 44 delays the frame data A0, A6, A12, ... by a predeterminded period of time, which are to be intra-frame-coded. The same frame data arranged in the macro unit block are outputted to the subtractor circuit 45. In contrast, with respect to the frame data B3, C1, C2, C4, C5, ..., which are to be inter-frame-coded, motion vectors MVP and MVN are detected on the basis of the frame data of predetermined predicted frames per macro unit block.

The motion vector detecting circuit 44 performs macro unit block basis transmissions, with a delay equivalent to a motion vector detecting time, of the frame group index GOF, the pre-predictor reference index PID, the post-predictor reference index NID and the temporary index TR together with the reordered picture data D_{VN}.

The subtractor circuit 45 creates prediction data D_{PRI} outputted from an adaptive prediction circuit 46 and deviation data D_{Z} of the picture data D_{VN}. The subtractor circuit 45 then transmits the created data to a discrete cosine transform circuit 47 and a weighting control circuit 48.

The adaptive prediction circuit 46 outputs, when executing intra frame coding, a mean value of the picture data of each pixel as the prediction data D_{PRI} per macro unit block. The adaptive prediction circuit 46 executes, when executing inter frame coding, a selective predicting process for selecting a pre-prediction, a post-prediction and an interpolative prediction. Thereafter, the circuit 46 outputs the frame data of a selected predicted result as the prediction frame data D_{PRI} per macro unit block.

With this arrangement, it is possible to obtain the deviation data D_{Z} relative to the frame data which are inter-frame-coded via the subtractor circuit 45. Besides, a mean value from the deviation data D_{Z} can also be obtained with respect to the frame data which are intra-frame-coded.

The discrete cosine transform circuit 47 cosine-transforms the deviation data D_{Z} per macro unit block by making use of a DCT method. The circuit 47 then transmits the output data thereof to a multiplication circuit 50.

The multiplication circuit 50 effects a predetermined weighting process on the output data of the discrete cosine transform circuit 47 in accordance with the control data generated from a weighting control circuit 48 on the basis of the deviation data D_{Z}. The circuit 50 subsequently send the weighted output data to a requantization circuit 51.

The requantization circuit 51 requantizes the output data of the multiplication circuit 50 by using the quantization step STEPG which is switch-controlled in accordance with the control data outputted from the data quantity control circuit 52 on the basis of a buffer remaining quantity of a buffer circuit 53. The circuit 51 then transmits the requantized output data to an inverse requantization circuit 54 and to a run-length Huffman coding circuit 55.

The inverse requantization circuit 54 executes a requantizing process, inverse to the requantization circuit 51, of the output data of the requantization circuit 51, thereby reproducing the data inputted to the requantization circuit 51. The reproduced data is supplied to an inverse multiplication circuit 56.

The inverse multiplication circuit 56 performs a multiplying process, inverse to the multiplication circuit 50 controlled by a weighting control circuit 48, of the output data of the inverse requantization circuit 54, thereby reproducing the data inputted to the multiplication circuit 50. The reproduced data is supplied to a discrete cosine inverse transform circuit 57.

The discrete cosine inverse transform circuit 57 effects a transform process, inverse to the discrete cosine transform circuit 47, of the output data of the inverse multiplication circuit 56. In consequence, the data inputted to the discrete cosine transform circuit 47, i.e., the deviation data D_{Z}, is reproduced and transmitted to a subsequent adder circuit 58.

The adder circuit 58 adds the prediction data D_{PRI} outputted from the adaptive prediction circuit 46 to the output data of the discrete cosine inverse transform circuit 57, the circuit 58 outputs the added data to the adaptive prediction circuit 46.

Obtained in the adaptive prediction circuit 46 through the adder circuit 58 are frame data D_{F} formed by reproducing the data inputted to the subtractor circuit 45. Consequently, predicted frames are set by selectively taking in the frame data D_{F}. Subsequently, there is acquired a selective predictive result associated with the frame data D_{VN} inputted to the subtractor circuit 45.

The frame data are inputted after being reordered according to an internal processing sequence. In the adaptive prediction circuit 46, the selective predicted result may therefore be detected by sequentially selectively taking in the frame data D_{F}. The video signals can be transmitted with a simpler construction, correspondingly.

Now, the first run-length Huffman coding circuit 55 effects a Huffman coding process, consisting of the variable-length coding process, of the output data of the requantization circuit 51. The circuit 55 transmits the Huffman-coded data to a transmission data synthesizing circuit 62.

Similarly, a second run-length Huffman coding circuit 63 Huffman-codes the motion vectors MVN and MVP and transmits the thus coded vectors to the transmission data synthesizing circuit 62.

Synchronizing with frame pulse signals S_{FP}, the transmission data synthesizing circuit 62 outputs the output data of the first and second run-length Huffman coding circuits 55 and 63, a predictor index PINDEX, the pre-predictor reference index PID, the post-predictor reference index NID and the temporary index TR together with the control information of the data quantity control circuit 52 in a predetermined order.

At this time, the transmission data synthesizing circuit 62 disposes headers per macro unit block, per block unit group, per frame data and per frame group. Added to the headers are the data such as the predictor index PINDEX, as a consequence of which the transmission data are decoded in accordance with the data added to the headers on the side of the reproducing device.

A reorder circuit 64 reorders the output data of the transmission data synthesizing circuit 62 in the sequence of effecting the coding process in each frame group. The circuit 64 outputs the reordered data to the buffer circuit 53. The transmission frame data DATA are sequentially outputted via the buffer circuit 53.

Thus, it is feasible to obtain the transmission frame data DATA in which the input video signals VD_{IN} are high-efficient-coded. The transmission frame data DATA are recorded together with the synchronizing signals or the like on the compact disc to effectively prevent the deterioration of the picture quality. Hence, the motion video signals can be recorded with a high density.

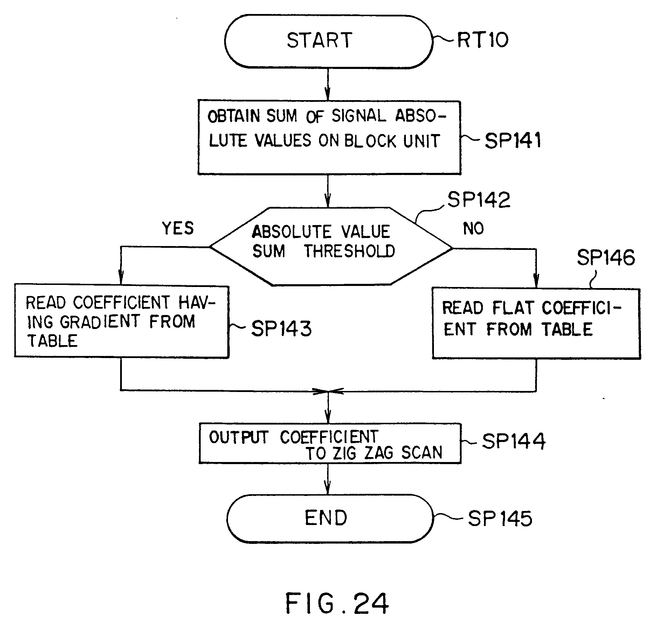

Note that in this embodiment, as depicted in FIG. 22, the individual frame data (FIG. 22(A)) undergoes 5 x 2 divisions in vertical and horizontal directions on the display screen; i.e., the frame data is divided into totally 10 block unit groups (FIG. 22(B)).

Each of the block unit groups is further subjected to 3 x 11 divisions in the vertical and horizontal directions; i.e., the block unit group is divided into 33 macro unit groups (FIG. 22(C)). The process is carried out on the basis of the macro unit group.

By way of an example, the single macro unit group is arranged such that 8-pixel picture data is allocated to one block, viz., the data are allocated to totally six blocks vertically and horizontally.

For these six blocks, luminance signals Y₁, Y₂, Y₃ and Y₄ are allocated to 2 x 2 blocks, totally 4 blocks, vertically and horizontally; and chrominance signals C_{R} and C_{B} corresponding to the luminance signals Y₁, Y₂, Y₃ and Y₄ are allocated to the remaining two blocks.

### Construction of Weighting Control Circuit

In the case of the video signal recording system 41 in this fifth embodiment, the weighting control circuit 48 is composed of a microcomputer including a ROM (Read Only Memory). The weighting control circuit 48 executes, as shown in FIGS. 23 and 24, a threshold setting program RT0 and a weighting coefficient setting program RT10 per frame and block BLK in the frame concerned, synchronizing with the frame pulses S_{FP}. The circuit 48 thus executes a predetermined weighting process of the output data of the discrete cosine transform circuit 47.

The weighting control circuit 48 is constructed to provide a subjectively improved picture quality by adjusting the weighting coefficient itself to the nature of the picture.

More specifically, in a region BLK including much information of a display picture, there is such a principle that even when reducing a weight of an oblique component of the high frequency components exhibiting the lowest spectral luminous efficacy, a deterioration is hard to be detected because of masking by other components. Based on this principle, the weighting function is selectively applied in connection with the region BLK in which a masking effect is expected, i.e., there exists a good deal of information of the objective display picture.

Based on the principle given above, the weighting control circuit 48 at first enters the threshold setting program RT0 per frame of the deviation data D_{Z}. synchronizing with the frame pulses S_{FP}. At the next step SP131, the circuit 48 obtains a total sum W_{ALL} of absolute values of the deviation data D_{Z} per region BLK (corresponding to the macro unit block as an internal processing unit in this case) inputted from the subtractor circuit 45 with respect to one entire frame.

Subsequent to this step, the weighting control circuit 48 divides the total sum W_{ALL} by the number of blocks contained in one frame at a step SP132, thus obtaining a means value of absolute value sum of the deviation data D_{Z} per block BLK. At a step SP133, a threshold level Wₜₕ is detected by increasing the mean value by a factor of n (n = 1.5 in this embodiment). The threshold setting program RT0 comes to an end at a step SP134.

The weighting control circuit 48 enters the weighting coefficient setting program RT10 per block BLK of the deviation data D_{Z}. At the next step SP141, the circuit 48 calculates an absolute value sum W_{BLK} of the deviation data D_{Z} per block BLK inputted from the subtractor circuit 45.

Subsequently, at a step SP142 the weighting control circuit 48 judges whether or not the obtained absolute value sum W_{BLK} per block BLK is greater than the threshold level Wₜₕ set by the threshold setting program RT0. If greater than that level (namely, this implies that the relevant block BLK is a region having a much information quantity W_{BLK}), the operation moves to a subsequent step SP143.

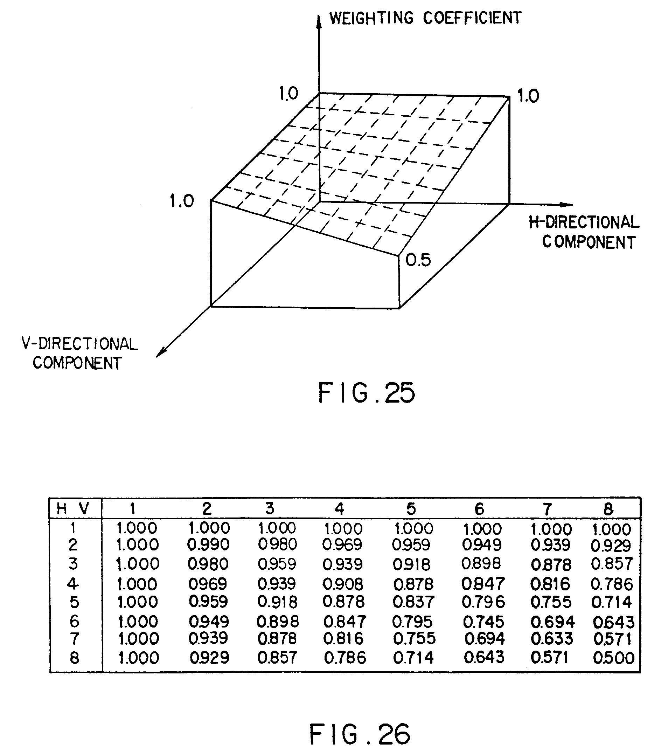

At the step SP143, as illustrated in FIG. 25, a horizontal component H and a vertical component V of the high frequency components are preserved. Read from the ROM is a coefficient table (FIG. 26) containing weighting coefficients each having a gradient to sequentially reduce the oblique components. The operation thereafter shifts to the next step SP144.

Whereas if not (viz., this implies that the relevant block BLK is a region having a small information quantity W_{BLK}) at the step SP142, the weighting control circuit 48 reads a coefficient table containing flat weighting coefficients (each consisting of a value [1]) from the ROM at a subsequent step SP146. The operation then proceeds to a step SP144.

At the step SP144, the coefficient table read from the ROM at the step SP143 or SP146 is then read out by zig-zag scanning in accordance with the DCT method. The table is transmitted as control data to the multiplication circuit 50. The weighting coefficient setting program RT10 is terminated at the next step SP145.

Much attention is thus paid to the information quantity W_{BLK} of each block BLK. The weighting coefficient having a gradient is given with respect to the block BLK having the information quantity W_{BLK} greater than the threshold level Wₜₕ based on the mean value per block BLK, the mean value being obtained from the total information quantity W_{ALL} of the frames. It is therefore possible to effectively prevent a picture fade appearing in. e.g., a region having a small information quantity and containing a good deal of high frequency components of the spatial frequency.

As a result of this arrangement, the weighting coefficient works effectively with respect to the block having a large amount of information. Hence, it is feasible to make the quantization step STEPG of the high frequency component of the spatial frequency larger than the quantization step STEPG of the low frequency component of the spatial frequency. The video signals can be transmitted with a high efficiency by effectively preventing the deterioration of the picture quality without incrementing the data quantity.

The weighting coefficient does not work with respect to the block BLK having a small information quantity W_{BLK}. The deterioration of the picture quality can be prevented because of preservation of the high frequency component of the spatial frequency.

### Advantages of the Embodiment

According to the construction discussed above, an emphasis is placed on the information quantity W_{BLK} of each block BLK. The weighting coefficient with the gradient is given in regards to the block having the information quantity larger than the threshold level Wₜₕ based on the mean value per block BLK, the mean value being is obtained from the total information quantity W_{ALL} of the frames. It is therefore possible to make the quantization step STEPG of the high frequency component of the spatial frequency than the quantization step STEPG of the low frequency component of the spatial frequency. Besides, the weighting coefficient exhibiting the flat characteristic is given with respect to the block BLK having the information quantity W_{BLK} smaller than the threshold level Wₜₕ. Hence, the weighting coefficient does not work, whereby the high frequency component of the spatial frequency can be preserved. Thus, the video signal recording system capable of improving the compression efficiency of the picture data can be attained by preventing the deterioration of the picture quality.

### Other Modifications of Fifth Embodiment

(5-1) In accordance with the fifth embodiment discussed above, the weighting coefficients having the gradients or the flat characteristics are held in the form of a table in the weighting control circuit. Instead, a constant value of, e.g., a value [1] is generated and may be supplied to the multiplication circuit 50 in connection with the block BLK having the information quantity W_{BLK} less than the threshold level Wₜₕ.
(5-2) In the above-described fifth embodiment, the weighting coefficients having the gradients or the flat characteristics are selectively given to the multiplication circuit 50 on the basis of comparative result between the block unit information quantity W_{BLK} and the threshold level Wₜₕ based on the mean value per block BLK which is obtained from the total information quantity W_{ALL}. Instead, the weighting coefficient having the gradient characteristic may be given to the multiplication circuit 50 with respect to the block BLK having the information quantity W_{BLK} greater than the threshold level Wₜₕ. Bypassing the multiplication circuit 50 may take place with respect to the block having the information quantity W_{BLK} smaller than the threshold level Wₜₕ.
(5-3) In the foregoing fifth embodiment, the information quantity is obtained from the absolute value sum of the deviation data D_{Z}. The method is not, however, limited to this. The same advantages as those of the foregoing embodiment can be exhibited by making use of power or an absolute value sum of the DCT coefficient and power of the deviation data based on Parseval's theorem.
(5-4) The foregoing fifth embodiment has dealt with a case where the block BLK is employed as a comparative region. The region is not, however, limited to thus. A variety of regions may be used in the discrete cosine transform circuit on condition that the DCT processing unit is applicable.
(5-5) The fifth embodiment given above has also dealt with a case where the weighting coefficient is multiplied in the multiplication circuit with respect to the output data which is discrete-cosine-transformed by the discrete cosine transform circuit and transmitted therefrom. The same advantages as those of the above-described embodiment can be produced even by such an arrangement that the discrete cosine transform circuit itself contains the weighting coefficients.
(5-6) In the fifth embodiment discussed above, there has been explained a case where the present invention is applied to the video signal recording system for transmitting the picture data after being discrete-cosine-transformed. This invention is not limited to the video signal recording system of this type. The present invention is also applicable to other video signal recording systems for transmitting the picture data after being, for instance, Fourier-transformed and for transmitting the picture data after time components of the picture data have been transformed into frequency components.
(5-7) In the foregoing fifth embodiment, there has also been given a case where the present invention is applied to the video signal recording system for recording the picture data on the compact disc. This invention is not limited to this video signal recording system. It is, however, preferable that the present invention is broadly applied to a video signal transmission system for transmitting digital video signals after being high-efficient-coded.

As discussed above, in accordance with the fifth embodiment of this invention and modifications thereof the transmission is effected by incrementing the quantization step of the high frequency component of the spatial frequency with respect to the region having the information quantity greater than the threshold level set by the total picture information quantity. With this arrangement, the deterioration of the picture quality can be avoided. The video signal transmission system capable of coding the picture data with a much higher efficiency can be attained.

While there has been described in connection with the preffered embodiments of the invention, it will be obvious to those skilled in the art that various changes and modifications may be made therein without departing from the invention, and it is aimed, therefore, to cover in the appended claims all such changes and modifications as fall within the scope of the invention.

## Claims

1. A method for compressing a frame of video data to be transmitted comprising:
dividing a frame of video data into a plurality of sub-regions thereto;
discrete cosine transform coding the frame of video data for each sub-region to provide discrete cosine transform coded video data;
quantizing the discrete cosine transform coded video data with a quantizing step of a variable size for each sub-region to provide quantized video data;
variable length coding the quantized video data to provide a variable length code being transmitted through a transmission buffer memory; and
controlling the size of quantizing step, said step of controlling determing said size of guantizing step of the sub-region in accordance with a generated amount of video data of the sub-region;
wherein said step of quantizing quantizes the discrete cosine transform coded video data with the determined quantizing step for each sub-region.

2. The method according to claim 1, said step of controlling determines the size of quantizing step for the sub-region in accordance with an amount of difference information representing differences between a mean value obtained from values of a plurality of pixels contained in the sub-region and each values of the plurality of pixels therein.

3. The method according to claim 1, said step of controlling determines the size of quantizing step for the sub-region in accordance with an amount of difference information representing differences between values of a plurality of pixels contained in the sub-region of the present frame and values of a plurality of pixels contained in the sub-regions of the preframe, the plurality of pixels included in the sub-region of the preframe being motion compensated.

4. An apparatus for compressing a frame of video data to be transmitted, comprising:
means for dividing a frame of video data into a plurality of sub-regions thereof;
means for discrete cosine transform coding the frame of video data for each sub-region to provide discrete cosine transform coded video data;
means for quantizing the discrete cosine transform coded video data with a quantizing step of a variable size for each sub-region to provide quantized video data;
means for variable length coding the quantized video data to provide a variable length code being transmitted through a transmission buffer memory; and
means for controlling the size of quantizing step, said controlling means determining said size of quantizing step of the sub-region in accordance with a generated amount of video data of the sub-region;
wherein said quantizing means quantizes the discrete cosine transform coded video data with the determined quantizing step for each sub-region.

5. The apparatus according to claim 4, said controlling means determines the size of quantizing step for the sub-region in accordance with an amount of difference information representing differences between a mean value obtained from values of a plurality of pixels contained in the sub-region and each values of the plurality of pixels therein.

6. The method according to claim 4, said controlling means determines the size of quantizing step for the sub-region in accordance with an amount difference information representing differences between values of a plurality of pixels contained in the sub-region of the present frame and values of a plurality of pixels contained in the sub-regions of the preframe, the plurality of pixels included in the sub-region of the preframe being motion compensated.

7. A method for compressing a frame of video data to be transmitted, comprising:
dividing a frame of video data into a plurality of sub-regions thereof;
discrete cosine transform coding the frame of video data for each sub-region to provide discrete cosine transform coded video data;
quantizing the discrete cosine transform coded video data with a quantizing step of a variable size of each sub-region to provide quantized video data;
variable length coding the quantized video data to provide a variable length code being transmitted through a transmission buffer memory; and
controlling the size of quantizing step, said step of controlling comprising detecting a change information representing changes between an amount of video information of the sub-region to be coded and each amount of video information of surrounding sub-regions and determining the size of quantizing step of said sub-region to be coded in accordance with said detected change information;
wherein said step of quantizing quantizes the discrete cosine transform coded video data with the determined quantizing step for each sub-region.

8. An apparatus for compressing a frame of video data to be transmitted, comprising:
means for dividing a frame of video data into a plurality of sub-regions thereof;
means for discrete cosine transform coding the frame of video data for each sub-region to provide discrete cosine transform coded video data;
means for quantizing the discrete cosine transform coded video data with a quantizing step of a variable size for each sub-region to provide quantized video data;
means for variable length coding the quantized video data to provide a variable length code being transmitted through a transmission buffer memory; and
means for controlling the size of quantizing step, said controlling means detecting a change information representing changes between an amount of video information of the sub-region to be coded and each amount of video information of surrounding sub-regions and determining the size of quantizing step of said sub-region to be coded in accordance with said detected change information;
wherein said quantizing means quantizes the discrete cosine transform coded video data with the determined quantizing step for each sub-region.
